(19) Europäisches Patentamt
European Patent Office
Office européen des brevets

(11) **EP 3 281 536 B1**

(12) **EUROPÄISCHE PATENTSCHRIFT**

(45) Veröffentlichungstag und Bekanntmachung des Hinweises auf die Patenterteilung:
**01.09.2021 Patentblatt 2021/35**

(51) Int Cl.:
***A24C 5/34*** *(2006.01)*  ***A24D 3/06*** *(2006.01)*
***G01N 21/952*** *(2006.01)*  ***G01N 22/02*** *(2006.01)*
***G01N 27/90*** *(2021.01)*  ***A24D 3/02*** *(2006.01)*
***A24D 3/04*** *(2006.01)*

(21) Anmeldenummer: **17182569.8**

(22) Anmeldetag: **21.07.2017**

(54) **VERFAHREN UND VORRICHTUNG ZUM ERKENNEN UND/ODER PRÜFEN EINES IN EIN STAB- ODER STRANGFÖRMIGES PRODUKT DER TABAK VERARBEITENDEN INDUSTRIE EINGELEGTEN OBJEKTS**

METHOD AND DEVICE FOR DETECTING AND/OR TESTING AN OBJECT INSERTED INTO A BAR OR STRAND-SHAPED PRODUCT OF THE TOBACCO PROCESSING INDUSTRY

PROCÉDÉ ET DISPOSITIF DE DÉTECTION ET/OU DE CONTRÔLE D'UN PRODUIT INSÉRÉ DANS UN PRODUIT EN FORME DE TIGE OU DE BARRE PROVENANT DE L'INDUSTRIE DU TABAC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.08.2016 DE 102016114642**

(43) Veröffentlichungstag der Anmeldung:
**14.02.2018 Patentblatt 2018/07**

(73) Patentinhaber: **Hauni Maschinenbau GmbH**
**21033 Hamburg (DE)**

(72) Erfinder:
• **MÜLLER, Johannes**
**22767 Hamburg (DE)**
• **KHAN, Rafael**
**22457 Hamburg (DE)**
• **KIRCHENSTEIN, Robert**
**22043 Hamburg (DE)**

(74) Vertreter: **Müller Verweyen**
**Patentanwälte**
**Friedensallee 290**
**22763 Hamburg (DE)**

(56) Entgegenhaltungen:
EP-A2- 2 762 016  DE-A1- 2 313 025
DE-A1-102011 006 439  DE-A1-102012 209 954
GB-A- 2 187 549  US-A- 3 993 194

• **Rainer Herrmann ET AL: "Determination of the Quality and the Position of Capsules in Filterrods", , 1 January 2011 (2011-01-01), XP055693911, Retrieved from the Internet: URL:http://www.hauck-patent.de/contact [retrieved on 2020-05-12]**

**Beschreibung**

Die Erfindung betrifft ein Verfahren zum Erkennen und/oder Prüfen eines in ein stab- oder strangförmiges Multisegmentprodukt der Tabak verarbeitenden Industrie eingelegten Objekts, insbesondere einer Kapsel, wobei das Multisegmentprodukt längsaxial durch eine Messvorrichtung gefördert wird, die eine Mikrowellen- und/oder Hochfrequenz-Messeinrichtung und eine optische Messeinrichtung umfasst und ein Mikrowellen- und/oder Hochfrequenz-Messsignal und ein optisches Messsignal ausgibt, die zur Auswertung an eine nachgeordnete Auswerteeinrichtung weitergeleitet werden. Die Erfindung betrifft weiterhin eine entsprechende Vorrichtung zum Erkennen und/oder Prüfen eines eingelegten Objekts. Die Erfindung betrifft ferner eine Strangmaschine der Tabak verarbeitenden Industrie mit wenigstens einer Einlegevorrichtung für einzulegende Objekte, einer Strangumhüllungsvorrichtung und einer Schneidvorrichtung, sowie eine Filterstabmessstation der Tabak verarbeitenden Industrie.

Die genaue Bestimmung der Eigenschaften von in einem stab- oder strangförmigen Produkt angeordneten Objekten, wie z. B. die Lage des Objekts in dem Strang sowie der Zustand des Objekts (etwa die Unversehrtheit einer Kapsel ermittelt über den Füllgrad der Kapsel) gewinnt in der Tabak verarbeitenden Industrie zunehmend an Bedeutung. Es ist bekannt, die Position von Objekten, insbesondere Kapseln, mit Hilfe einer Mikrowellenmessvorrichtung zu ermitteln. Dies gilt sowohl für den Offline- als auch für den Online-Bereich. Eine bekannte Messeinrichtung aus dem Offline-Bereich zur Bestimmung der Kapselposition in Filterstäben ist zum Beispiel die Filterstabmessstation SODISCAN-MWS der Firma Sodim SAS. Weiterhin ist aus der EP 1 845 291 A1 eine Filterstabmessstation bekannt mit einer Mikrowellenmessvorrichtung zur Offline-Bestimmung sowie aus der EP 2 243 385 A2 eine Mikrowellenmesseinrichtung für die Online-Bestimmung von Objekteigenschaften ist. Zudem offenbart die EP 2 873 334 A1 die Verwendung eines kombinierten Mikrowellen- und Hochfrequenzverfahrens.

Eine Herausforderung in diesem Zusammenhang ist die Erkennung und Messung von Objekten in unmittelbarer Nähe von das Messsignal beeinflussenden Zusatzstoffen, die in einem faserförmigen Grundmaterial, insbesondere Filtertowmaterial, in dem Produkt vorgesehen sein können, beispielsweise Aktivkohle, oder andere Zusatzstoffe, wobei unter Zusatzstoffen auch ein weiteres Objekt, z.B. in Form einer weiteren Kapsel verstanden werden kann. Die Schwierigkeit liegt darin begründet, dass der Zusatzstoff das von dem Objekt erzeugte Messsignal verändert, weil sich Zusatzstoff und Objekt teilweise zeitgleich in dem Messfenster der Messvorrichtung befinden. Der Einfluss des Zusatzstoffes auf das Objekt ist unter anderem von folgenden Faktoren abhängig: Menge und Beschaffenheit des Zusatzstoffes; Größe, Füllmenge und Beschaffenheit des Objekts; Abstand zwischen Objekt und Zusatzstoff.

Ist der Abstand groß genug, befinden sich also Objekt und Zusatzstoff zu keinem Zeitpunkt gleichzeitig im Messfenster, so lässt sich die Position der Kapsel beispielsweise über das lokale Maximum des Signalausschlags der Messvorrichtung bestimmen.

Ist der Abstand zwischen Zusatzstoff und Objekt jedoch so gering, dass zu einem bestimmten Zeitpunkt sich Zusatzstoff und Objekt im Messfenster der Messvorrichtung befinden, so wird das von dem Objekt hervorgerufene Signal derart geändert, dass das erzeugte lokale Maximum verschoben ist im Vergleich zur tatsächlichen Position. Bei sehr geringem Abstand und/oder kleinem Objekt und/oder großer Zusatzstoffmenge ist überhaupt kein lokales Maximum mehr identifizierbar.

Besondere Probleme stellen sich im Falle eines aus mehreren axialen Segmenten zusammengesetzten Produkts (Multisegmentprodukt), insbesondere eines Multisegment-Filterstabs oder -Filterstrangs, weil Übergänge zwischen benachbarten Segmenten mittels einer Mikrowellen- und/oder Hochfrequenzmessvorrichtung häufig nicht oder nicht genau genug erfasst werden können.

Das Messsignal liegt vorzugsweise als ortsabhängiges Signal, insbesondere als ortsdiskretes Signal vor, d.h. die einzelnen Messwerte liegen in äquidistanten Abständen zueinander, unabhängig von der Produktionsgeschwindigkeit der Maschine.

Bei einem zeitabhängigen Signal, insbesondere eines zeitdiskreten oder zeitkontinuierlichen Messsignals, ist es erforderlich, dieses in ein ortsabhängiges Signal umzuwandeln.

Unter Ableitung ist im Folgenden stets die Ableitung nach dem Ort gemeint.

R. Herrmann und U. Schlemm, "Determination of the Quality and the Position of Capsules in Filterrods", RHODIA Colloquium, Freiburg, Mai 2011, offenbart eine Messvorrichtung zur Messung an Filterstäben mit darin eingelegten Aromakapseln, umfassend eine Mikrowellenmesseinrichtung zur Bestimmung der Kapselposition relativ zu einer Sollposition bzw. zur Bestimmung des Kapselabstands, und einen optionalen optischen 3-Laser-Sensor zur Überwachung der Form der Filterstäbe oder zur Erkennung von Hohlräumen in Multisegmentfiltern sowie longitudinalen Ausnehmungen in Monofiltern und Hohlfiltern.

DE 10 2012 209954 A1 offenbart eine Kombinationsstrangmessvorrichtung 20 mit einer Mikrowellenstrangmessvorrichtung 30 zur Erkennung von Stranginhomogenitäten, insbesondere eingelegten Objekten.

Der vorliegenden Erfindung liegt die Aufgabe zugrunde, die Eigenschaften eines in ein stab- oder strangförmiges Multisegmentprodukt der Tabak verarbeitenden Industrie eingelegten Objekts mit hoher Genauigkeit zu erkennen, wobei unter Eigenschaften insbesondere Lage, Füllgrad und/oder Unversehrtheit verstanden wird, und zwar auch unter erschwerten Messbedingungen, insbesondere auch bei Anordnung des Objekts in der Nähe eines das Messsignal beeinflussenden Zusatzstoffs, wie beispielsweise Aktivkohle.

Diese Aufgabe wird durch die Merkmale der unabhängigen Patentansprüche gelöst. Es hat sich erfindungsgemäß herausgestellt, dass Erkennung und Prüfung eines in ein stab- oder strangförmiges Multisegmentprodukt eingelegten Objekts zuverlässiger und genauer durch Auswertung mindestens einer Ableitung des Messsignals, anstelle allein aus dem Messsignal selbst, im Folgenden auch Grundsignal genannt, möglich ist, da die Ableitungen des Messsignals empfindlicher auf das eingelegte Objekt reagieren als das Grundsignal.

Prüfen eines Objekts umfasst erfindungsgemäß die Bestimmung mindestens einer Eigenschaft des Objekts. Erkennen eines Objekts umfasst erfindungsgemäß die Bestimmung der Anwesenheit des Objekts, was ebenfalls eine Eigenschaft des Objekts (Anwesenheit oder Abwesenheit im stab- oder strangförmigen Multisegmentprodukt) darstellt. Die mindestens eine Ableitung kann vorteilhaft gemeinsam mit dem Grundsignal ausgewertet werden. Des Weiteren können vorteilhaft mehrere Ableitungen, beispielsweise die erste und die zweite Ableitung, des Messsignals, ggf. gemeinsam mit diesem, ausgewertet werden. Zu prüfende Objekte im Sinne der Anmeldung sind insbesondere diskrete Objekte, wie Kapseln, insbesondere flüssigkeitsgefüllte Kapseln, d.h. Kapseln mit einer festen Hülle, die mit einer Flüssigkeit gefüllt sind. Die Flüssigkeit enthält in solchen Fällen bspw. Geschmacksstoffe und/oder Duftstoffe, wie Menthol. Zur Verwendung bricht ein Konsument die Kapsel vor dem Rauchen durch Druck auf das Filterende auf und zündet die Zigarette anschließend an. Durch den Druck auf die Kapsel im Filter wird die Flüssigkeit freigesetzt, so dass sich das Aroma der Flüssigkeit entfaltet. Diese Vorgehensweise bietet ein besonders intensives oder frisches Geschmackserlebnis. Entsprechende Kapseln weisen einen Durchmesser von ca. 1,5 bis 3,5 mm auf, können aber auch kleiner sein.

EP 2 606 754 A2 offenbart ein Verfahren und eine Vorrichtung, bei dem zur Messung der Position von Abschnitten in Multisegmentfiltern der Tabak verarbeitenden Industrie die erste Ableitung aus einer gemessenen Resonanzfrequenzverschiebung und/oder Dämpfung gebildet wird.

Das Messverfahren bzw. die Messvorrichtung in EP 2 762 016 verwendet ebenfalls zur Positionsbestimmung in Basisstäben oder in einem Materialstrang eingelegter Objekte das Spektrum des Messsignals bzw. die Resonanzfrequenzverschiebung. In Abkehr zum nächstliegenden Stand der Technik wurde bei der vorliegenden Erfindung erkannt, dass es für die Bestimmung der Objekteigenschaften vorteilhaft ist, direkt das zeitabhängige und/oder ortsabhängige Messsignal weiterzuverarbeiten und nicht noch einen weiteren Rechenschritt zur Bestimmung des Spektrums und/oder der Resonanzfrequenzverschiebung und/oder Dämpfung vorzunehmen, da durch die direkte Weiterverarbeitung des Messsignals Verfälschungen durch vorausgegangene Algorithmen, z. B. zur Bestimmung der Resonanzfrequenzverschiebung und/oder Dämpfung, vermieden werden.

Die Erfindung ermöglicht besonders vorteilhaft eine Ermittlung der axialen Position des Objekts in dem stab- oder strangförmigen Multisegmentprodukt.

DE 10 2011 006 439 offenbart eine Vorrichtung zum Erkennen und Prüfen eines in ein stab- oder strangförmiges Produkt der Tabak verarbeitenden Industrie eingelegten Objekts, nämlich einer Kapsel, umfassend eine Mikrowelleneinrichtung, eine optische Messvorrichtung und eine Ausgabe der Signale, wobei die Auswerteeinrichtung zur gemeinsamen Auswertung der Messsignale der optischen Messvorrichtung und der Mikrowellenvorrichtung eingerichtet ist. In dieser Vorrichtung wird zur Auswertung und Analyse der Messsignale keine Ableitung verwendet, welches einen grundlegenden Unterschied zur vorliegenden Erfindung darstellt.

Aufgrund von erhöhten Anforderungen an die Messvorrichtung, da das sich in dem zu prüfenden Produkt mehrere Kapsel in geringen Abständen und weitere Zusatzstoffe enthalten können, ist die Vorrichtung aus DE 10 2011 006 439 nicht mehr hinreichend präzise. Die vorliegende Erfindung ermöglicht durch eine erweiterte Auswerteeinrichtung die hinreichend präzise Bestimmung der entsprechenden Eigenschaft der Objekte und Zusatzstoffe.

Vorzugsweise wird mindestens eine Eigenschaft des Objekts aus mindestens einem lokalen Extremum und/oder Wendepunkt und/oder Nulldurchgang im Kurvenverlauf der mindestens einen Ableitung und/oder des Messsignals bestimmt.

Bei dem aus EP 2 606 754 A2 bekannten Verfahren wird die Ableitung der Verschiebung der Resonanz, die sich an dem Übergang zwischen zwei Abschnitten unterschiedlichen Materials, und zwar ausdrücklich einem stärker und einem schwächer absorbierenden Material, betrachtet und das Maximum der Ableitung wird diesem Übergang zugeordnet. Dieses Vorgehen ist nur für homogene Abschnitte gültig, die in ihrer Längenausdehnung größer als das Messfenster sind. Bei kleineren Abschnitten in Form eines eingelegten Objekts, wie z.B. einer Kapsel, die kleiner als das Messfenster ist, gilt dies nicht, da sich herausgestellt hat, dass in einem solchen Fall das Maximum der Ableitung nicht mit der tatsächlichen Position der Kapsel übereinstimmt.

Bei der vorliegenden Erfindung werden insbesondere die Veränderung der beiden Maxima der Ableitung (linker und rechter Wendepunkt) hinsichtlich Position und Betrag betrachtet und daraus Rückschlüsse auf die Position und den Betrag des Objekts gezogen. Das gleiche Verfahren kann auch auf zwei benachbarte Objekte angewandt werden. Aus der Position des Wendepunktes kann die Position des Objekts bestimmt bzw. abgeschätzt werden, weil erstens das Objekt, d.h. seine Größe, bekannt ist und zweitens die Funktion des Messfensters bekannt ist bzw. ermittelt wurde.

Es hat sich herausgestellt, dass die zweite Ableitung des Messsignals besonders empfindlich hinsichtlich der Position des Objekts ist. Demnach wird die Position des zu prüfenden Objekts vorteilhaft aus einem Charakteristikum, insbesondere einem lokalen Extremum, besonders vorteilhaft einem lokalen Minimum der zweiten Ableitung ermittelt.

In diesem Fall ergibt sich die eine Füllmenge des Objekts vorteilhaft aus dem Intensitätswert des Messsignals bzw. des Grundsignals an der zuvor ermittelten Objektposition. Der Intensitätswert bezeichnet dabei die Amplitude des Grundsignals, d.h. den y-Wert in einem Zeit- oder Ortsdiagramm des Messsignals.

Bei starken Verzerrungen kann zur Korrektur der ermittelten Position und/oder Füllmenge des Objekts vorteilhaft jeweils eine entsprechende Korrekturfunktion herangezogen werden, die besonders vorteilhaft aus einem oder mehreren Verzerrparametern, die eine Verzerrung des Messsignals durch ein zum Messobjekt benachbartes Objekt beschreiben, ermittelt wird. Das Maß der Verzerrung kann über charakteristische Punkte auf dem Graphen ermittelt werden. Als Beispiel seien lokale Extrema und/oder Nulldurchgänge der ersten und/oder zweiten Ableitung genannt. Es hat sich als günstig erwiesen, von diesen Werten die entsprechenden Werte eines unverzerrten Signals zu subtrahieren, wodurch der entsprechende Verzerrparameter im Idealfall (Istwert = Sollwert) Null wird.

Vorteilhaft wird die mindestens eine Ableitung mittels eines digitalen FIR-Filters, insbesondere eines Filters für einfache numerische Differentiation, Differentiation mit interpolierenden kubischen Splines oder Differentiation nach dem Rombergverfahren gebildet. Eine Ableitung oder Ableitungsfunktion lässt sich auch über die Messwerte ermitteln, ein bekanntes Verfahren hierfür ist die numerische Differentiation, die eine näherungsweise Berechnung der Ableitung mittels eines Differenzquotienten erlaubt. Ein weiteres bekanntes Verfahren ist die Spline-Interpolation, wobei durch gegebene Stützstellen, auch Knoten genannt, mit Hilfe stückweise stetiger Polynome, genauer Splines, zu interpolieren. Während das Ergebnis einer Polynominterpolation durch festgelegte Stützstellen oft unbrauchbar oszilliert, liefert die Spline-Interpolation brauchbare Kurvenverläufe und Approximationseigenschaften. Die Spline-Interpolation lässt sich vorteilhaft mit geringem linearem Aufwand berechnen. Ein weiteres geeignetes Verfahren zum Bilden einer Ableitung ist das Rombergsche Differentiationsverfahren.

Ein vorteilhafter FIR-Filter zeichnet sich dadurch aus, dass neben dem aktuellen Abtastwert $x_k$ eine bestimmte Anzahl von Abtastwerten $x_{k-j}$ vor dem aktuellen Abtastwert mit in die Rechnung einbezogen wird, um den aktuellen Ausgangswert $y_k$ des Filters zu berechnen.

$$y_k = \sum_{j=0}^{j=n} g_j * x_{k-j}$$

Hierbei sind die Konstanten $g_j$ geeignet gewählte Gewichtsfaktoren.

Bei der vorliegenden Erfindung ist erkannt worden, neben einer Mikrowellen- und/oder Hochfrequenzmesseinrichtung eine optische Messeinrichtung zur Bestimmung der Eigenschaften des Objekts mit einzubeziehen. Bislang ist es nur bekannt, die Eigenschaften von Objekten mittels Mikrowellen- und/oder Hochfrequenzmesseinrichtungen zu bestimmen. Mit den bekannten Messvorrichtungen können aber die folgenden Messaufgaben nicht erfüllt werden: Abstand von Objekt zu benachbarter Grenzfläche zwischen zwei Segmenten; absolute Position des Objekts relativ zur Schnittlage; Erkennen von leeren oder teilgefüllten Objekten in der Nähe von absorbierenden Zusatzstoff enthaltenden Segmenten; Erkennung und Bestimmung der Kapselfüllung.

Die Erfindung betrifft daher eine Vorrichtung zum Erkennen und/oder Prüfen eines an vorbestimmter Objektposition in ein stab- der strangförmiges Multisegmentprodukt der Tabak verarbeitenden Industrie eingelegten Objekts mit einer Kombinationsmessvorrichtung, die neben der erfindungsgemäßen Mikrowellen- und/oder Hochfrequenzmesseinrichtung des Weiteren noch eine optische Messeinrichtung zur Messung an dem durch diese geförderten Multisegmentprodukt und Ausgabe eines optischen Messsignals umfasst, wobei die Auswerteeinrichtung zur gemeinsamen, d.h. kombinierten Auswertung der Messsignale der optischen Messeinrichtung und der Mikrowellen- und/oder Hochfrequenzmesseinrichtung eingerichtet ist. Die optische Messeinrichtung stellt vorteilhaft komplementäre Messinformation zu der Mikrowellen- und/oder Hochfrequenzmesseinrichtung zur Verfügung. Auf diese Weise können mittels der optischen Messeinrichtung Messaufgaben gelöst werden, die allein mittels der Mikrowellen- und/oder Hochfrequenzmesseinrichtung nicht, oder nicht mit zufriedenstellender Genauigkeit, gelöst werden können.

Durch Auswertung des Messsignals der optischen Messeinrichtung wird erfindungsgemäß ein Übergang zwischen Segmenten eines Multisegmentprodukts ermittelt, was alleine mit der Mikrowellen- und/oder Hochfrequenzmesseinrichtung häufig nicht möglich ist. Dies kann vorzugsweise dadurch geschehen, dass die Auswerteeinrichtung die erste Ableitung des optischen Messsignals bildet und den Übergang zwischen Segmenten eines Multisegmentprodukts aus einem Charakteristikum, insbesondere einem lokalen Extremum, der ersten Ableitung ermittelt. Erfindungsgemäß wird durch die gemeinsame, d.h. kombinierte Auswertung der Messsignale der optischen Messeinrichtung und der Mikrowellen- und/oder Hochfrequenzmesseinrichtung der Abstand eines eingelegten Objekts zu einem Übergang zwischen Segmenten des Multisegmentobjekts ermittelt.

Multisegmentprodukte können beispielsweise Segmente mit Aktivkohle (Charcoal), Kieselerde, Kunststoff, Aluminium, Tabakfasern, Tabakextrudat, NWA-(Non-Wrapped-Acetat) Filtersegmente, Tube-Segmente und/oder Monoacetatsegmente aufweisen.

Bei der Ermittlung eines Übergangs zwischen Segmenten des Multisegmentprodukts wird vorteilhaft ein Bereich um eine zuvor ermittel-Des Weiteren wird vorteilhaft zur gemeinsamen Auswertung ein zeitlicher Versatz, der zwischen den Messsignalen aufgrund eines in Produktförderrichtung gegebenen Abstands zwischen der optischen Messeinrichtung und der Mikrowellen- und/oder Hochfrequenzmesseinrichtung berücksichtigt und/oder korrigiert.

In einer praktischen Ausführungsform ist die Mikrowellen- und/oder Hochfrequenzmesseinrichtung als Mikrowellenmesseinrichtung mit einem Hohlraumresonator ausgebildet und insbesondere mit einer Messfrequenz im Bereich zwischen 1 GHz und 16 GHz betreibbar. Die Mikrowellenmesseinrichtung umfasst neben dem Hohlraumresonator vorzugsweise einen integrierten Mikrowellengenerator und kann eine eingebettete Auswerteelektronik umfassen.

Alternativ kann die Mikrowellen- und/oder Hochfrequenzmesseinrichtung als kapazitive Hochfrequenzmesseinrichtung mit einem, insbesondere ringförmigen, Messkondensator ausgebildet und insbesondere mit einer Messfrequenz im Bereich zwischen 10 MHz und 1 GHz betreibbar sein.

Die optische Messeinrichtung kann vorteilhaft als insbesondere im sichtbaren Spektralbereich messende, d.h. mit einer Messwellenlänge im Bereich zwischen 380 nm und 780 nm betreibbare, Transmissionsmessvorrichtung und insbesondere als Lasersensoreinheit ausgebildet sein.

In der Auswerteeinrichtung wird mittels eines Auswertealgorithmus, insbesondere eines FIR-Filters, vorteilhaft die erste Ableitung des optischen Messsignals gebildet. Vorteilhafterweise werden durch die Auswerteeinrichtung lokale Maxima der ersten Ableitung des optischen Messsignals zum Bestimmen eines Übergangs zwischen benachbarten Segmenten eines Multisegmentprodukts ermittelt. Zusammen mit entsprechenden Charakteristika des Mikrowellen- und/oder Hochfrequenzmesssignals kann der Abstand eines eingelegten Objekts zu einem benachbarten Segment ermittelt werden.

Beim Prüfen von Multisegmentfiltern mit gleichfarbigen Übergängen, wie z.B. bei Acetatsegment-Tubesegment oder genauer Monoacetatsegment-Hohlfiltersegment, kommt es vor, dass ein gewisser Kontrast an diesem Übergang zwar gegeben ist, der Einfluss einer beispielsweise farbigen Kapsel im Acetatsegment jedoch im gesamten Signalverlauf dominiert. Da die Kapseln zudem in Grenzen in ihrer Position schwanken, liefert eine Kreuzkorrelation, welche zur Schnittlagebestimmung berechnet wird, einen stark fehlerbehafteten Einstellwert für die Regelung bspw. eines Einlegerades. Die Erfindung schlägt hier vor, dass aus einem ersten lokalen Maximum der ersten Ableitung des optischen Messsignals und unter Ausblendung eines zweiten benachbarten lokalen Maximums, welches mit einem lokalen Maximum des Mikrowellen- und/oder Hochfrequenzmesssignals bezogen auf dieselbe Position des Multisegmentobjekts im Wesentlichen zusammenfällt, ein Schnittlagesignal abgeleitet und einer übergeordneten Maschinensteuerung zugeführt wird.

Eine Weiterbildung zeichnet sich dadurch aus, dass zur gemeinsamen Auswertung ein zeitlicher Versatz, der zwischen den Messsignalen aufgrund eines in Produktförderrichtung gegebenen Abstands zwischen den Messvorrichtungen entsteht, durch Kreuzkorrelation berücksichtigt wird. Alternativ wird vorgeschlagen, dass ein solcher zeitlicher Versatz unabhängig von einer momentanen Fördergeschwindigkeit durch einen Distanzoffsetwert korrigiert wird. Vorzugsweise kann der Distanzoffsetwert in Form eines Parameters in eine Eingabe- und Anzeigevorrichtung eingebbar und der Auswerteeinrichtung zuführbar sein.

Die der Erfindung zugrunde liegende Aufgabe wird auch durch eine Strangmaschine der Tabak verarbeitenden Industrie, insbesondere Multisegmentstrangmaschine oder Multisegmentfilterstrangmaschine oder kurz Multifiltermaschine, mit einer erfindungsgemäßen, zuvor beschriebenen Vorrichtung gelöst. Die der Erfindung zugrunde liegende Aufgabe wird ferner gelöst durch eine Filterstabmessstation der Tabak verarbeitenden Industrie mit einer erfindungsgemäßen, zuvor beschriebenen Vorrichtung. Die Strangmaschine bzw. die Filterstabmessstation hat somit die gleichen Merkmale, Vorteile und Eigenschaften wie die zuvor beschriebene Vorrichtung und das zuvor beschriebene Verfahren.

Segmente, die Aktivkohle enthalten, können in einem vorgelagerten Herstellungsprozess mittels einer geeigneten Filterstrangmaschine als zunächst endloser, mit Aktivkohle beladener Filterstrang hergestellt und nachfolgend in Abschnitte gewünschter Länge geschnitten werden. Eine derartige Filterstrangmaschine ist beispielsweise in der deutschen Offenlegungsschrift DE 41 09 603 A1 beschrieben.

Die Erfindung wird im Folgenden anhand bevorzugter Ausführungsformen unter Bezugnahme auf die beigefügten Figuren erläutert. Dabei zeigt

Fig. 1    eine schematische Darstellung einer ersten erfindungsgemäßen Vorrichtung;

Fig. 2    eine schematische Darstellung einer zweiten erfindungsgemäßen Vorrichtung;

Fig. 3    eine schematische perspektivische Darstellung einer Kombinationsstrangmessvorrichtung;

Fig. 4    eine schematische Darstellung der Sollpositionen eines Messsignals;

Fig. 5a    eine schematische Darstellung der Volumenfunktionssignale;

Fig. 5b    eine schematische Darstellung der Messsignale;

Fig. 5c    eine schematische Darstellung der Ableitungen der Messsignale;

Fig. 6    eine vergrößerte Darstellung der Ableitungen der Messsignale gemäß Fig. 5c;

Fig. 7    eine schematische Darstellung von Korrekturwerten;

Fig. 8a    eine schematische Darstellung eines Strangabschnitts mit eingebetteten Objekten;

Fig. 8b    einen Kurvenverlauf des Grundsignals zu einem Strangabschnitt gemäß Fig. 8a;

Fig. 8c    einen Kurvenverlauf der ersten Ableitung des Grundsignals gemäß Fig. 8b;

Fig. 8d    einen Kurvenverlauf der zweiten Ableitung des Grundsignals gemäß Fig. 8b;

Fig. 9a    eine schematische Darstellung von zwei verschiedenartigen benachbarten Segmenten eines Multisegmentstrangabschnitts;

Fig. 9b    einen Kurvenverlauf des Grundsignals zu einem Multisegmentstrangabschnitt gemäß Fig. 9a;

Fig. 9c    einen Kurvenverlauf der ersten Ableitung des Grundsignals gemäß Fig. 9b;

Fig. 9d    einen Kurvenverlauf der zweiten Ableitung des Grundsignals gemäß Fig. 9b;

Fig. 10    eine schematische Darstellung eines zweiten Multisegmentstrangabschnitts mit einer Kombinationsstrangmessvorrichtung und zugeordneten Messsignalen;

Fig. 11    eine schematische Darstellung eines dritten Multisegmentstrangabschnitts mit einer Kombinationsstrangmessvorrichtung und zugeordneten Messsignalen;

Fig. 12a    eine schematische Darstellung eines vierten Multisegmentstrangabschnitts mit einer Kombinationsstrangmessvorrichtung und zugeordneten Messsignalen;

Fig. 12b    eine schematische Darstellung des vierten Multisegmentstrangabschnitts aus Fig. 12a mit Kennzeichnung des erfindungsgemäß ausgeblendeten Bereichs;

Fig. 13a    einen Graph des Frequenzsignals und des Dämpfungssignals zu einem Multisegmentstrangabschnitt in normierter Darstellung;

Fig. 13b    einen vergrößerten Ausschnitt des Frequenzsignals und des Dämpfungssignals aus Fig. 13a mit eingeblendeten Kapseln; und

Fig. 13c    einen Differenzsignalverlauf des Frequenzsignals und des Dämpfungssignals aus Fig. 13b.

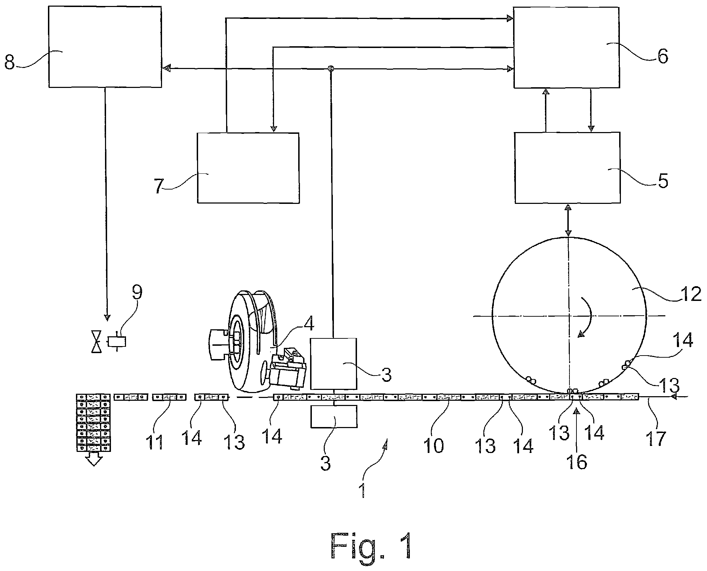

Fig. 1 zeigt schematisch einen Teil einer Multisegmentfilterstrangmaschine. Ein Multisegmentfilterstrang 10 wird entlang der Längsachse 17, also längsaxial, in Fig. 1 von rechts nach links gefördert. In den Multisegmentfilterstrang 10 werden mittels eines Einlegerades 12 Kapseln 13 und 14 jeweils in im Wesentlichen äquidistanten Abständen zu weiteren Kapseln 13 und 14 in den Multisegmentfilterstrang 10 eingebracht bzw. eingelegt. Der Multisegmentfilterstrang 10 weist nachfolgend nebeneinanderliegende Kapseln 13 und 14 auf, um die und zwischen denen Acetattow oder ein anderes Filtermaterial angeordnet ist. Es sind jedoch auch Multisegmentfilterstränge mit in Hohlkammern eingelegten Kapseln 13, 14 bekannt, welche sich mit der erfindungsgemäßen Messanordnung überprüfen ließen.

Der mit den Kapseln 13 und 14 befüllte Multisegmentfilterstrang 10 durchläuft dann eine Mikrowellen-Strangmessvorrichtung 3, die einen Mikrowellenresonator umfasst, in dem unter anderem die Qualität des Filterstrangs und die Befüllung mit Kapseln 13 und 14 überprüft wird. Verschiedene Formen von Strangmessvorrichtungen 3 sind beispielsweise aus der DE 198 54 550 B4 - dort ohne integrierte Auswerteelektronik - und der DE 10 2011 083 049 A1 - dort mit integrierter Auswerteelektronik - der Anmelderin bekannt. An dieser Stelle wird ausdrücklich auf die letztgenannte DE 10 2011 083 049 A1 Bezug genommen, da diese die Möglichkeit bietet, neben dem Mikrowellengenerator auch komplexe elektronische Bauteile zur Signalauswertung, wie Digital-Analog-Wandler (D/A-Wandler), Field Programmable Gate Arrays (FPGA's) und Digitalrechner im Gehäuse aufzunehmen. Zur Signalauswertung enthält die Strangmessvorrichtung 3 zweckmäßigerweise einen Digital-Analog-Wandler und wenigstens einen digitalen FIR-Filter (Finite Impulse Response Filter). Insbesondere dient die Strangmessvorrichtung 3 auch zur längsaxialen Positionsbestimmung der Kapseln 13 und 14. Schließlich schneidet eine Schneidvorrichtung 4, die hier als rotierender Messerträger ausgebildet ist, den Multisegmentfilterstrang 10 in doppeltlange Multisegmentfilterstäbe 11. Sollte in der Strangmessvorrichtung 3 festgestellt werden, dass die Qualität der hergestellten Multisegmentfilterstäbe 11 nicht in Ordnung ist, werden diese durch eine Ausblasvorrichtung 9 ausgeblasen.

Die Steuerung und Regelung der entsprechenden Komponenten der Multisegmentfilterstrangmaschine 1 wird im Folgenden beschrieben. Die Drehgeschwindigkeit des Einlegerads 12 wird durch ein lageregeltes Antriebssystem 5 gesteuert. Dieses gibt ein entsprechendes Steuersignal an einen nicht dargestellten Motor des Einlegerades 12 ab. Die jeweilige Drehwinkelposition des Einlegerads wird als längsaxiale Istposition dem Antriebssystem 5 zurückgeführt, das einen Lageistwert einem Lageregler 6 zur Verfügung stellt. Der Lageregler 6 gibt einen Lagesollwert an das Antriebssystem 5 ab. Dieses ist durch die entsprechenden Verbindungslinien mit Pfeilen, die die jeweiligen Komponenten in Fig. 1 verbinden, angedeutet. Die Strangmessvorrichtung 3 gibt insbesondere die jeweils ermittelte längsaxiale Position der in den Multisegmentfilterstrang 10 eingelegten Kapseln 13 und 14 sowohl an den Lageregler 6 als auch an eine Auswerteeinrichtung 8 weiter. Bei falscher Lage dient die Auswerteeinrichtung 8 dazu, ein Auswurfsignal an die Ausblasvorrichtung 9 abzugeben, sodass Multisegmentfilterstäbe 11 mit falsch positionierten Kapseln 13 bzw. 14 ausgeblasen werden.

Bei fehlerfreier Produktion werden das Einlegerad 12 für die Kapseln 13, 14 sowie die Schneidvorrichtung 4 in ihrer Winkellage einmal zueinander richtig eingestellt, so dass der Schnitt an der vorgegebenen Position relativ zu den Positionen der Kapseln und der Aktivkohleabschnitte erfolgt. Unter anderem kann es durch Verschleiß eines Formatbandes im Laufe der Produktion zu einem langsam einsetzenden Schlupf zwischen Multisegmentfilterstrang 10 und Formatband kommen. Die Folge hiervon ist ein langsames systematisches Weglaufen der Kapselposition von der Sollposition und somit relativ zur Schnittlage bzw. zur Schnittposition der Multisegmentfilterstäbe 11. Dieses Problem kann mit Hilfe des Messsystems dadurch gelöst werden, dass bei einem systematischen Weglaufen der Kapseln die Winkellage zwischen Einlegerad 12 und Schneidvorrichtung 4 durch eine Schnittlageregelung mittels des Lagereglers 6 nachgeregelt wird, wobei das Antriebssystem 7 einen Masterimpuls, den sogenannten DCP (Double Cigarette Pulse), für das Nachregeln der Position des Einlegerades 12 bereitstellt.

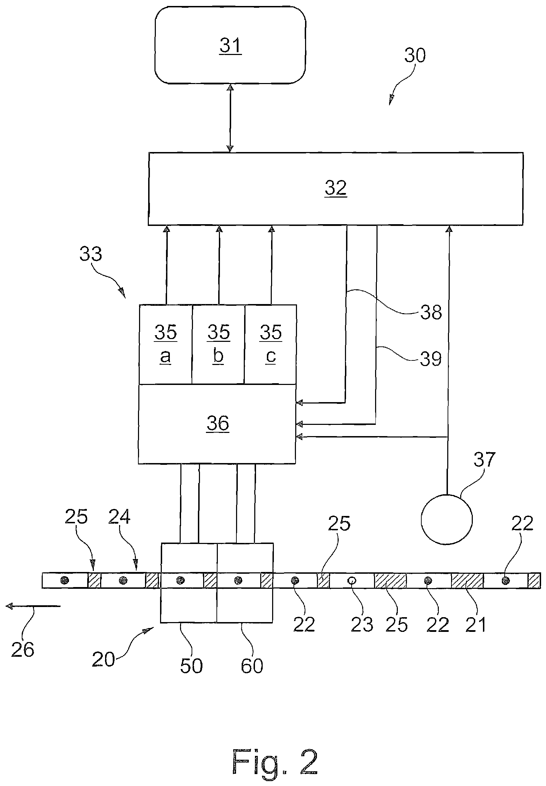

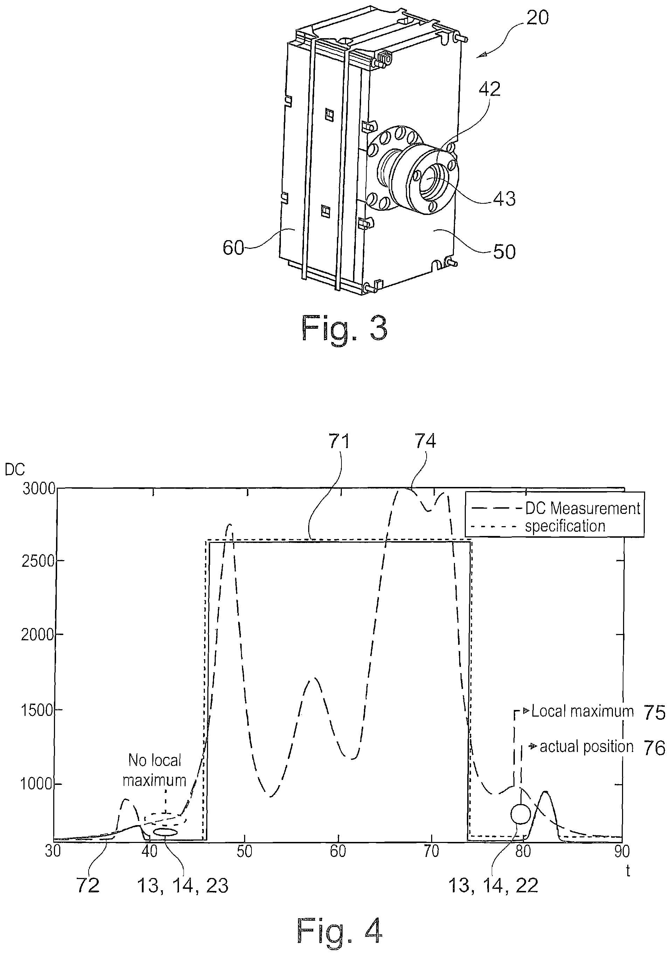

Fig. 2 zeigt schematisch eine weitere erfindungsgemäße Vorrichtung 30. Dort wird ein Materialstrang 21 in Form eines Multisegmentfilterstrangs 10 mit eingelegten Objekten 22 und Aktivkohleabschnitten 25 durch eine beispielsweise in Fig. 4 gezeigte Kombinationsstrangmessvorrichtung 20, bestehend aus zwei unmittelbar benachbarten Strangmessvorrichtungen 50, 60, in Strangförderrichtung 26 gefördert. Ferner ist ein defektes Objekt 23 schematisch dargestellt. Dabei kann es sich beispielsweise um eine Kapsel 13, 14 handeln, die beschädigt ist und ihren Flüssigkeitsinhalt verloren hat oder bereits vor dem Einlegen in den Strang nicht vollständig gefüllt war.

Die Vorrichtung 30 weist weiterhin eine Eingabe- und Anzeigevorrichtung 31 auf, die mit der Maschinensteuerung 32 verbunden ist. Die Maschinensteuerung 32 empfängt unter anderem ein Signal von einem Impulsgeber, einen hochgenauen Weggeber oder Drehwinkelgeber 37, der bevorzugt als Absolutwertgeber ausgebildet sein kann. Die Maschinensteuerung 32 verfügt auch über ein Maschinentaktsignal, nämlich das bereits genannte DCP-Signal, mit dem die Synchronisation der verschiedenen Strangvorrichtungskomponenten, insbesondere eines nicht dargestellten Einlegerades oder einer anderen Einlegeeinrichtung, mit einer ebenfalls nicht dargestellten Strangschneidvorrichtung erfolgt.

Wie der Fig. 2 deutlich zu entnehmen ist, sind die erste Strangmessvorrichtung 50 und die zweite Strangmessvorrichtung 60 vorzugsweise unmittelbar benachbart zueinander angeordnet. Die Strangmessvorrichtungen 50, 60 sind hinsichtlich der genutzten Frequenzbereiche verschieden ausgebildet, so dass für einen selben Strangabschnitt wenigstens zwei Signale für eine Auswertung bereitstehen. Für das vorgeschlagene Verfahren, nämlich die Signal- bzw. Kurvenverläufe gemeinsam auswerten, sind zusätzliche Rechenoperationen erforderlich, um den gegeben wirksamen Abstand in Strangrichtung zu berücksichtigen. Ein erstes ortsaufgelöstes Messsignal der ersten Strangmessvorrichtung 50, beispielweise einer Mikrowellenstrangmessvorrichtung 51, durch die ein definierter Abschnitt eines Materialstrangs 21 mit Objekten 22 zunächst hindurchtritt, weist einen Signalverlauf auf, gegenüber dem ein zweites ortsaufgelöstes Messsignal von der zweiten Strangmessvorrichtung 60, stromabwärts oder stromaufwärts von der ersten Strangmessvorrichtung 50 angeordnet ist, einen zeitlichen Versatz Δt auf. Zur Auswertung dieser Messsignale kann in der Auswerteeinrichtung 33, die insbesondere als digitale Signalverarbeitungsanlage ausgebildet ist, in einem Offsetalgorithmus dieser zeitliche Versatz eliminiert werden, so dass nach Anwendung des Offsetalgorithmus beide Messsignale zeitlich zueinander passen. Dieser zeitbasierende Offsetwert ist insbesondere in Beschleunigungs- und Abbremsphasen zu ungenau. Da die zweite Strangmessvorrichtung 60 und die erste Strangmessvorrichtung 50 fest miteinander verbunden sind und somit ein fester, definierter Abstand der jeweiligen Messfenster zueinander besteht, reicht eine einmalige Kalibrierung und/oder Vorgabe eines definierten Wegoffsetwertes in einem vorbestimmten Parameterfeld für die Auswertung. Sowohl für die Auswertung als auch für die Korrektur des zeitlichen Versatzes können die Signale des Drehwinkelgebers 37 verwendet werden, so dass beide Messsignale mit ihren Kurvenzügen positionsgenau übereinander liegen. Weiterhin sind die Messsignale in der Auswerteeinrichtung 33 skaliert oder normiert, um die Amplituden in eine vergleichbare Größenordnung zu bringen.

Bei einer im Detail nicht dargestellten Ausgestaltung der Kombinationsstrangmessvorrichtung 20 ist diese aus einer Mikrowellenstrangmessvorrichtung 51 und einer optischen Strangmessvorrichtung 52 gebildet. Eine geeignete optische Strangmessvorrichtung 52, hier eine Laser-Strangmessvorrichtung, ist in der DE 10 2004 003 447 A1 beschrieben und der Mikrowellenstrangmessvorrichtung 51 in Strangförderrichtung 26 vorzugsweise vorgeordnet. Eine derartige erfindungsgemäße Kombination von Strangmessvorrichtungen 50, 60 ist besonders geeignet, den Abstand zwischen einem objektfreien Segment, nämlich des Segmentübergangs im Multisegmentfilterstrang 10 und einer eingelegten Kapsel 13, 14 in einem benachbarten Segment bestimmen zu können.

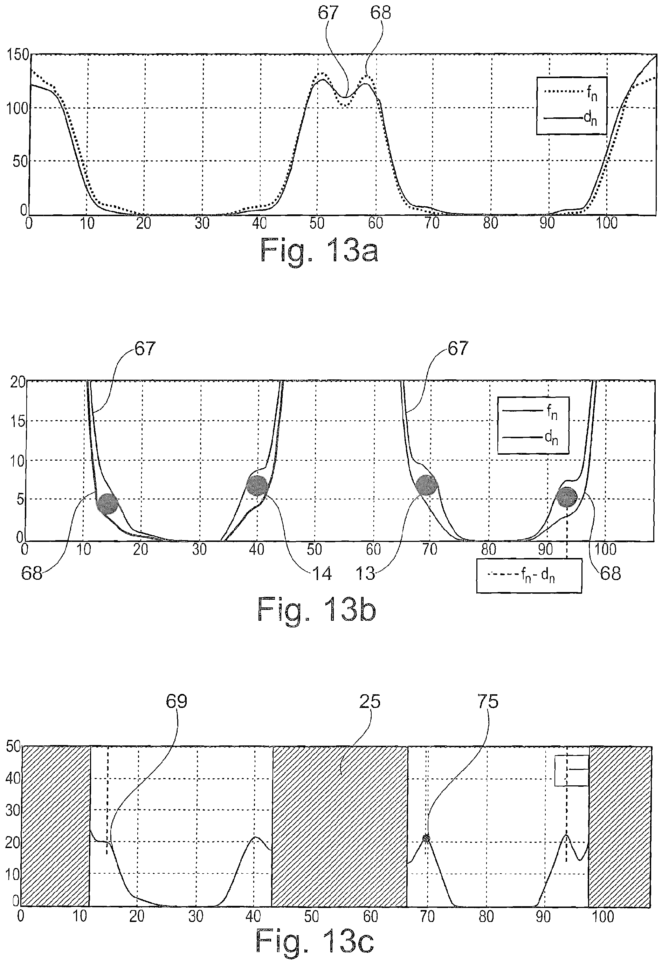

Die Auswerteeinrichtung 33 kann auch in die Maschinensteuerung 32 integriert sein. Die Auswerteeinrichtung 33 ist insbesondere ein schneller Messdatenrechner mit einer CPU, auf dem ein Softwareprogramm ausgeführt wird, welches in einer Weiterbildung der Erfindung verschiedene Algorithmen für wenigstens zwei verschiedene Strangmessvorrichtungskombinationen steuern kann. Ein erster Algorithmus, hier Mikrowellenalgorithmus 35a, kann beispielsweise vorgesehen sein, die Messsignale einer einzigen Mikrowellenstrangmessvorrichtung 51 zu verarbeiten. Ein zweiter Algorithmus, hier Mikrowellen-/Laseralgorithmus 35c, kann bspw. vorgesehen sein, die Messsignale der Mikrowellenstrangmessvorrichtung 51 und einer optischen Strangmessvorrichtung 52 gemeinsam zu verarbeiten. Die Auswerteeinrichtung 33 kann wenigstens einen digitalen FIR-Filter für Filteroperationen und/oder mathematische Operationen unabhängig für jede angeschlossene Strangmessvorrichtung 50, 60 oder mit anderen Worten pro Messkanal aufweisen. Ein dritter Algorithmus, hier Differenzbildungsalgorithmus 35b, kann bspw. vorgesehen sein, zwei Messsignale einer einzigen Mikrowellenstrangmessvorrichtung 51 gemeinsam zu verarbeiten, wie es in den Fig. 13a, Fig. 13b und Fig. 13c gezeigt ist.

Zudem kann optional eine Algorithmenumschaltung 36 vorgesehen sein, mittels der, abhängig von der Art der Strangmessvorrichtung(en) 50, 60 und/oder von der Art des zu prüfenden Materialstrangs 21, verschiedene Algorithmen auswählbar sind. Hierzu kann die Algorithmenumschaltung 36 ein Steuersignal 38 für die Umschaltung sowie ein Schnittlagesignal 39 von der Maschinensteuerung 32 empfangen, um die Messsignale für die jeweiligen Segmente zu bewerten. Das Steuersignal 38 für die Umschaltung kann auch Informationen darüber aufweisen, von welcher Art der zu prüfende Materialstrang ist. Weiterhin erhält die Auswerteeinrichtung 33 Informationen darüber, an welchen Positionen sich Objekte 22 befinden sollten. Die weiteren Algorithmen können dazu dienen, ein zweites Messsignal, das sogenannte Kombinationsmesssignal, zu verarbeiten, um durch mathematische Überlagerung des Mikrowellensignals mit dem Lasermesssignal falsch positionierte, nicht vollständig gefüllte oder defekte Kapseln zu detektieren oder eine Konsistenzmessung bezüglich Dichte, Feuchte in vorbestimmten Segmentabschnitten des Multisegmentfilterstrangs im Wesentlichen gleichzeitig und ortsaufgelöst durchzuführen und zu überprüfen.

In Fig. 3 ist die Kombinationsstrangmessvorrichtung 20 aus Fig. 2 in einer perspektivischen Ansicht schematisch dargestellt. Der Betrachter blickt auf die Vorderseite der Kombinationsstrangmessvorrichtung 20 mit einem Strangeintrittsrohr 42 und einem Schutzrohr 43, wobei die beiden einzelnen Gehäuse dort zu einem gemeinsamen Gehäuse verbunden sind. In einer nicht dargestellten Ausgestaltung einer Kombinationsmessvorrichtung 20 sind beide Strangmessvorrichtungen 50, 60 als steckbare Module ausgeführt. Diese Module sind auf einer Trägerplatine gesteckt und in einem gemeinsamen Gehäuse untergebracht. Ein Beispiel für eine derartige Kombinationsmessvorrichtung ist in der deutschen Offenlegungsschrift DE 10 2012 102 340 A1 offenbart.

In Fig. 4 ist beispielhaft dargestellt, welcher Signalverlauf sich bei einer Messung mit lediglich einer einzigen Mikrowellenstrangmessvorrichtung 3, 51 bei direkter Verarbeitung und Auswertung eines Mikrowellensignals mit Bezug auf einen Objektabschnitt 24 und/oder einen Aktivkohleabschnitt 25 ergeben könnte. Die gestrichelte Linie stellt dabei den idealen Kapselsignalverlauf 72 und die durchgezogene Linie stellt den idealen Kohlesignalverlauf 71 dar. Das resultierende Mikrowellensignal 74 ist als strichpunktierte Linie dargestellt. Weiterhin ist ein eingelegtes unbeschädigtes Objekt 22 oder eine Kapsel 13, 14 als Kreis und ein defektes Objekt 23 oder eine Kapsel 13, 14 als flache Ellipse dargestellt. Fig. 4 zeigt deutlich, dass das Signal der unbeschädigten Kapsel bereits derart verändert wird, dass das erzeugte lokale Maximum 75 im Vergleich zur tatsächlichen aktuellen Position 76 verschoben ist. Bei der beschädigten Kapsel ist kein lokales Maximum mehr auszumachen. Die Ursache liegt darin, dass bei einem geringen Abstand zwischen Kapsel und Kohle beide Stoffe zu bestimmten Zeitpunkten zugleich im Messfenster der Strangmessvorrichtung 50, 60 liegen.

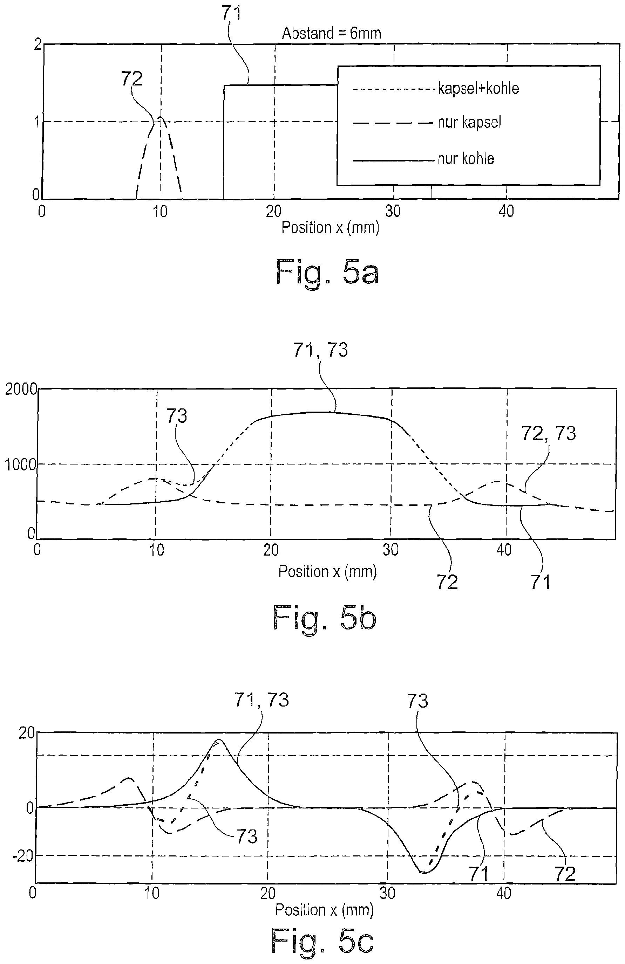

Die Fig. 5a bis Fig. 5c stellen drei Phasen der erfindungsgemäßen Bestimmung der Kapselposition dar, wobei der Grundgedanke ist, dass die von der Kohle abgewandte Seite weniger beeinflusst ist als die der Kohle zugewandte Seite. Der Übergang im Signalverlauf weist damit einen Wendepunkt auf. Die Fig. 5a, Fig. 5b und Fig. 5c zeigen zunächst den theoretischen und idealen Kapselsignalverlauf 72 als gestrichelte Linie und den idealen Kohlesignalverlauf 71 als durchgezogene Linie. Die Fig. 5b zeigt in Form einer gepunkteten Linie einen simulierten gemeinsamen Kapsel-/Kohlesignalverlauf 73 über beide Stoffe auf Basis des Kapselsignalverlaufs 72 und eines Kohlesignalverlaufs 71. Die Bestimmung des Wendepunktes des Kapselkurvenzugs bzw. des Kapselsignalverlaufs 72 kann somit zur Positionsbestimmung der Kapsel herangezogen werden. Wie der Fig. 5c zu entnehmen ist, wird hierfür jeweils die erste Ableitung der Messsignale mittels eines geeigneten FIR-Filters gebildet. Für die Verschiebung des Wendepunktes kann ein funktionaler Zusammenhang mit den Werten der Ableitungen links und rechts der jeweiligen Kapsel genutzt werden.

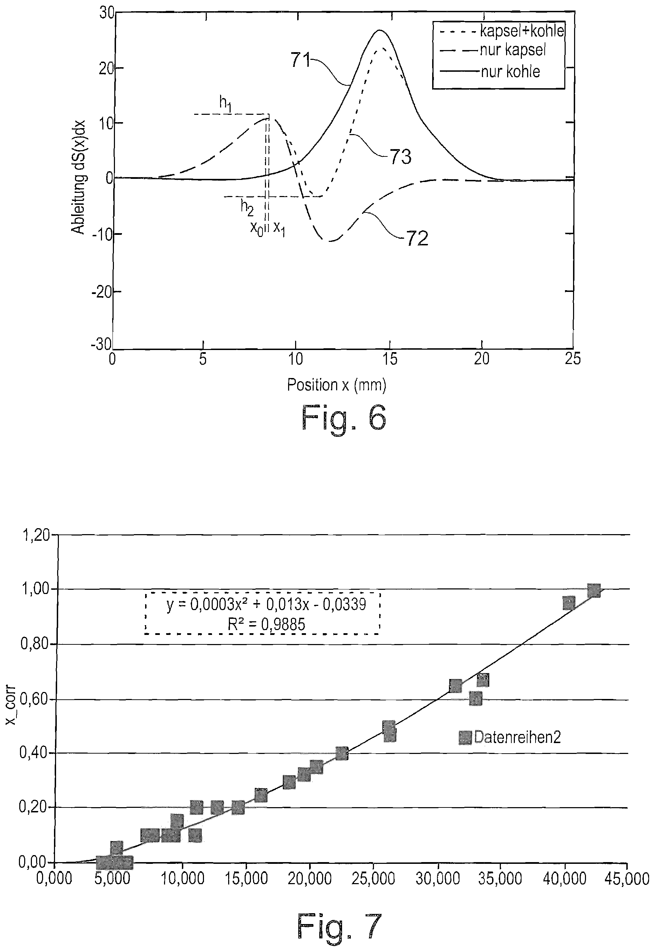

In Fig. 6 ist der zeitliche Verlauf der Ableitungen der Messsignale aus Fig. 5c als vergrößerter Ausschnitt im Bereich von 0 bis 25 mm dargestellt. Die gezeigten Maxima $h_1$ und $h_2$ der Ableitungen des Kapselsignalverlaufs 72 und des Kapsel-/Kohlesignalverlaufs 73 geben die entsprechenden Wendepunkte der Ursprungsverläufe an. Es ist der Fig. 6 weiterhin zu entnehmen, dass die gezeigten Maxima $h_1$ und $h_2$ einen zeitlichen Versatz $X_0$, $X_1$ bzw. in einem bestimmten Moment einen Abstand $X_0$, $X_1$ von einigen Zehntelmillimetern aufweisen. Um eine verbesserte Aussage über die Position der Kapsel treffen zu können, ist ein Korrekturwert $X_{korr}$ zu ermitteln und dem Kapselmesswert zuzurechnen. Diese Korrekturwerte $X_{korr}$ wurden experimentell bestimmt und sind in der Fig. 7 dargestellt. Die Korrekturwerte $X_{korr}$ liegen im Ausführungsbeispiel zwischen Null und einem Millimeter. Die Korrekturwerte können jedoch bei anderen Materialpaarungen auch größer oder kleiner sein.

Die in Fig. 5a, Fig. 5b, Fig. 5c und Fig. 6 dargestellten Signalverläufe gelten bei entsprechender Skalierung prinzipiell auch für eine nicht dargestellte kapazitive HF-Strangmessvorrichtung. Die absoluten Beträge für die Maxima $h_1$ und $h_2$ sowie den Versatz $X_0$, $X_1$ wären jedoch abweichend, insbesondere treten bei einer kapazitiven HF-Strangmessvorrichtung die Bereiche mit einem hohen Flüssigkeitsgehalt stärker hervor, so lassen sich bspw. frisch ausgelaufene Kapseln oder Feuchtenester noch besser identifizieren.

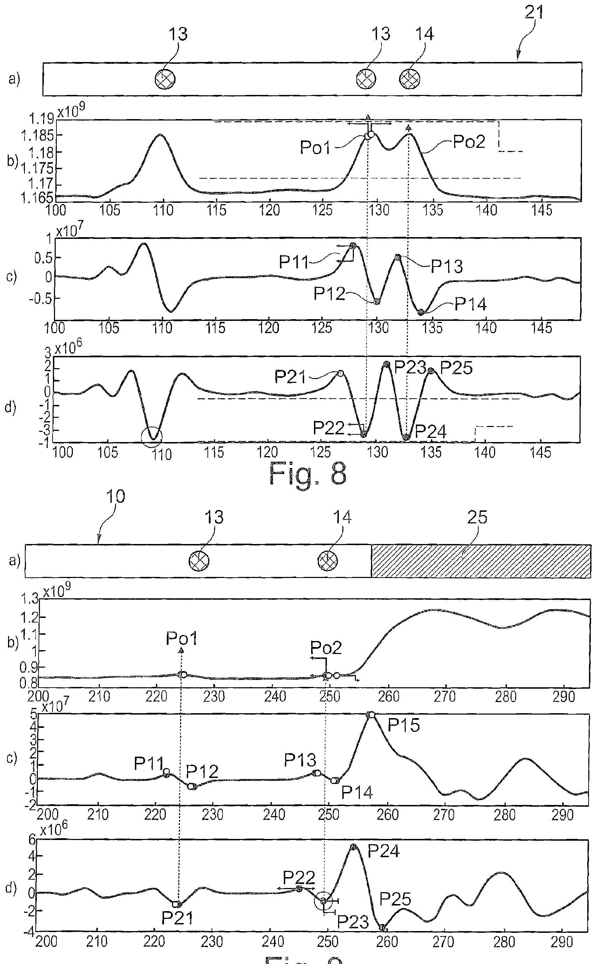

Den Fig. 8a, Fig. 8b, Fig. 8c, Fig. 8d und Fig. 9a, Fig. 9b, Fig. 9c, Fig. 9d lassen sich besonders deutlich die Zusammenhänge der mittels einer einzigen Strangmessvorrichtung 50, 60, insbesondere einer Mikrowellenstrangmessvorrichtung 51, gemessenen Kapselpositionen und der tatsächlichen Kapselpositionen in einem Multisegmentfilterstrangabschnitt entnehmen.

Die Einflüsse auf das Messsignal einer Kapsel 13, 14 in der unmittelbaren Nähe einer weiteren Kapsel 13, 14 zeigen die Fig. 8a, Fig. 8b, Fig. 8c und Fig. 8d. Die Fig. 8a zeigt schematisch einen Ausschnitt eines Materialstrangs welcher drei eingebettete Kapseln aufweist, wobei die in der Figur linke Kapsel 13, 14 von den rechts dargestellten nah beabstandeten Kapseln 13, 14 quasi isoliert ist. Fig. 8b lässt deutlich erkennen, dass das Grundsignal im Bereich der nah beabstandeten Kapseln 13, 14 deutlich im Vergleich zur isolierten Kapsel 13, 14 verzerrt ist, wo der Signalverlauf des Grundsignals im Wesentlichen symmetrisch um die Kapselposition $P_{00}$ liegt. Die erste Ableitung (Fig. 8c) bildet einen nahezu punktsymmetrischen Verlauf, wobei der Nulldurchgang $P_{10}$ der Position der Kapsel 13, 14 entspricht. Die zweite Ableitung (Fig. 8d) bildet wieder einen symmetrischen Verlauf um die Ebene der Kapsel 13, 14. Das lokale Maximum $P_{00}$ im Grundsignal entspricht folglich dem Nulldurchgang $P_{10}$ der ersten Ableitung (Fig. 8c) und dem lokalen Minimum $P_{20}$ der zweiten Ableitung (Fig. 8d). Die lokalen Maxima $P_{01}$, $P_{02}$ im Bereich der nah beabstandeten Kapseln 13, 14 sind gegenüber den Kapselpositionen bereits verschoben. Die lokalen Minima $P_{22}$ und $P_{24}$ der zweiten Ableitung in Fig. 8d sind wieder symmetrisch ausgebildet und entsprechen der Position der Kapseln. Der y-Wert (Intensitätswert) bei der Kapselposition $P_{01}$ im Grundsignal (Figur 8b) ist dabei ein zuverlässiges Maß für den Füllgrad bzw. die Füllmenge der Kapsel 13.

Die Einflüsse auf das Messsignal einer Kapsel in der unmittelbaren Nähe eines Aktivkohlesegments zeigen die Fig. 9a, Fig. 9b, Fig. 9c und 9d. Die Fig. 9a zeigt schematisch einen Ausschnitt eines Multisegmentfilterstrangs 10, welcher zwei eingebettete Kapseln aufweist, wobei die in der Figur linke Kapsel 13, 14 von der rechts dargestellten Kapsel 13, 14, welche nahe dem Aktivkohlesegment bzw. dem Aktivkohleabschnitt 25 positioniert ist, quasi isoliert ist. Fig. 9b lässt erkennen, dass das Grundsignal im Bereich des Aktivkohleabschnitts 25 deutlich im Vergleich zur isolierten Kapsel 13, 14 verzerrt ist, wo der Signalverlauf des Grundsignals im Wesentlichen symmetrisch um die Kapselposition $P_{01}$ liegt. Die erste Ableitung (Fig. 9c) bildet einen nahezu punktsymmetrischen Verlauf, wobei der Nulldurchgang zwischen den relativen Extrema $P_{11}$ und $P_{12}$ der Position der Kapsel 13, 14 entspricht. Die zweite Ableitung (Fig. 9d) bildet wiederum einen symmetrischen Verlauf um die Ebene der Kapsel 13, 14. Das lokale Maximum $P_{01}$ im Grundsignal entspricht folglich dem Nulldurchgang der ersten Ableitung (Fig. 9c) und dem lokalen Minimum $P_{21}$ der zweiten Ableitung (Fig. 9d). Das lokale Maximum $P_{02}$ im Bereich des Aktivkohleabschnitts 25 ist dagegen nicht mehr ausgebildet. Die Ableitungen verhalten sich demgegenüber überraschenderweise anders, so wird das lokale Maximum $P_{13}$ der ersten Ableitung links von der Kapsel kaum verzerrt, da es auf der von dem Aktivkohleabschnitt 25 abgewandten Seite der Kapsel 13, 14 liegt. Das lokale Minimum $P_{14}$ rechts von der Kapsel 13, 14 wird dagegen sehr deutlich verzerrt. Aus dem Unterschied dieser zwei Signale lässt sich ein Maß der Verzerrung ableiten. Das Minimum $P_{23}$ der zweiten Ableitung in Fig. 9d bleibt insbesondere hinsichtlich der Position fast unverändert, wobei dieses Minimum $P_{23}$ auch ausgeprägt ist, wenn kein lokales Maximum $P_{02}$ im Grundsignal erkennbar ist und entspricht der Position der Kapsel.

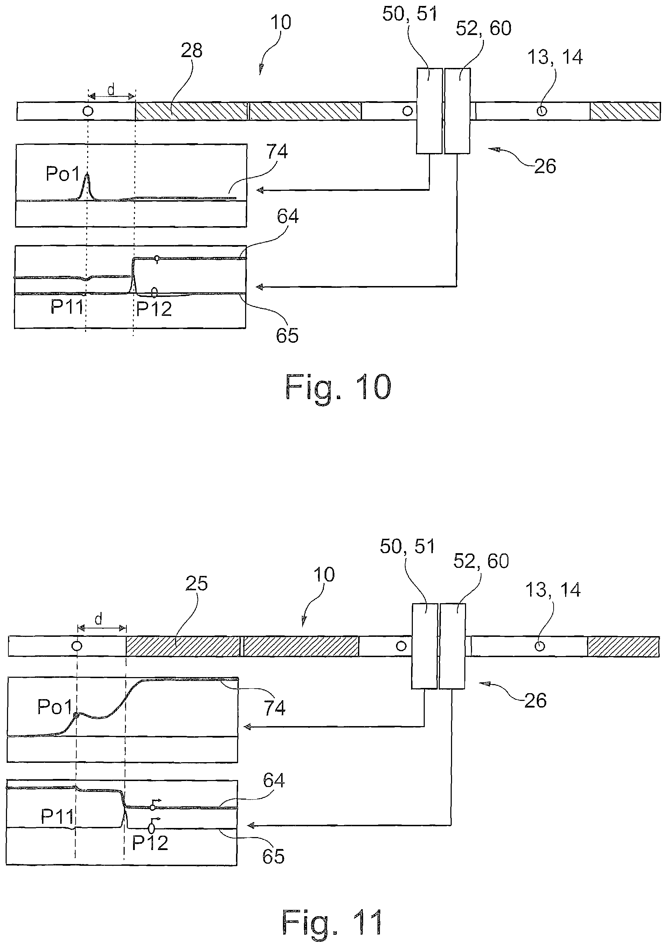

Den Fig. 10, Fig. 11, Fig. 12a und Fig. 12b lassen sich besonders deutlich die Zusammenhänge bei einer Nutzung von zwei Strangmessvorrichtungen 50, 60, insbesondere einer Mikrowellenstrangmessvorrichtung 51 und einer optischen Strangmessvorrichtung 52, gemessenen Kapselpositionen und der tatsächlichen Objekt- bzw. Kapselposition in einem Segment benachbart zu einem objekt- bzw. kapselfreien Segment eines Multisegmentfilterstrangabschnitts entnehmen. Das kapselfreie Segment weist dabei gegenüber dem Kapselsegment jeweils eine andere Dichte und/oder eine andere Farbe auf.

Die Einflüsse auf das Messsignal einer Kapsel in der unmittelbaren Nähe eines Farbsegments oder eines Segments erhöhter Dichte, wie bspw. ein NWA-Segment 28 oder ein mit amorpher Kieselerde dotiertes Segment, zeigt die Fig. 10. Die Fig. 10 zeigt schematisch einen Ausschnitt eines Multisegmentfilterstrangs 10, welcher ein Segment mit einer eingebetteten Kapsel 13, 14 aufweist, wobei die Kapsel 13, 14 einen Abstand d zu dem benachbarten Farbsegment oder dem NWA-Filtersegment hat. Die Fig. 10 lässt erkennen, dass das Mikrowellensignal 74 der Mikrowellenstrangmessvorrichtung 51 im Bereich der Kapsel 13, 14 nicht merklich verzerrt ist, und der Signalverlauf im Wesentlichen symmetrisch um die Kapselposition $P_{01}$ liegt. Die Fig. 10 lässt weiter erkennen, dass das Lichtintensitätssignal 64 der optischen Strangmessvorrichtung 52 im Bereich der Kapsel 13, 14 sehr gering ist und dagegen der Signalverlauf am Segmentübergang sehr deutlich als steigende Flanke ausgebildet ist. Zudem hängt das Grundsignal der optischen Strangmessvorrichtung 52 stark von der Farbe der Kapsel ab. Die erste Ableitung 65 des Lichtintensitätssignals 64 bildet einen nahezu punktsymmetrischen Verlauf mit einem lokalen Maximum am Segmentübergang aus. Der Abstand d von der Kapsel bis zu einem benachbarten NWA-Filtersegment 28 oder Farbsegment lässt sich somit durch die erfindungsgemäße Strangmessvorrichtungskombination einfach und genau bestimmen.

Die Einflüsse auf das Messsignal einer Kapsel in der unmittelbaren Nähe eines Charcoalsegments oder eines Charcoalabschnitts 25 zeigt die Fig. 11. Die Fig. 11 zeigt schematisch einen Ausschnitt eines Multisegmentfilterstrangs 10, welcher ein Segment mit einer eingebetteten Kapsel 13, 14 aufweist, wobei die Kapsel 13, 14 einen Abstand d zu dem benachbarten Charcoalsegment hat. Die Fig. 11 lässt erkennen, dass das Mikrowellensignal 74 der Mikrowellenstrangmessvorrichtung 51 im Bereich der Kapsel 13, 14 merklich verzerrt ist, und der Signalverlauf im Wesentlichen asymmetrisch um die Kapselposition $P_{01}$ liegt. Die Fig. 11 lässt weiter erkennen, dass das Lichtintensitätssignal 64 der optischen Strangmessvorrichtung 52 im Bereich der Kapsel 13, 14 sehr gering ist und dagegen der Signalverlauf am Segmentübergang sehr deutlich als fallende Flanke ausgebildet ist. Zudem hängt das Grundsignal der optischen Strangmessvorrichtung 52 stark von der Farbe der Kapsel und des kapselfreien Segments ab. Die erste Ableitung 65 des Lichtintensitätssignals 64 bildet einen nahezu punktsymmetrischen Verlauf mit einem lokalen Maximum $P_{12}$ am Segmentübergang aus. Der Abstand d von der Kapsel bis zu einem benachbarten Charcoalsegment oder Charcoalabschnitt 25 lässt sich somit durch die beschriebene Strangmessvorrichtungskombination einfach und genau bestimmen.

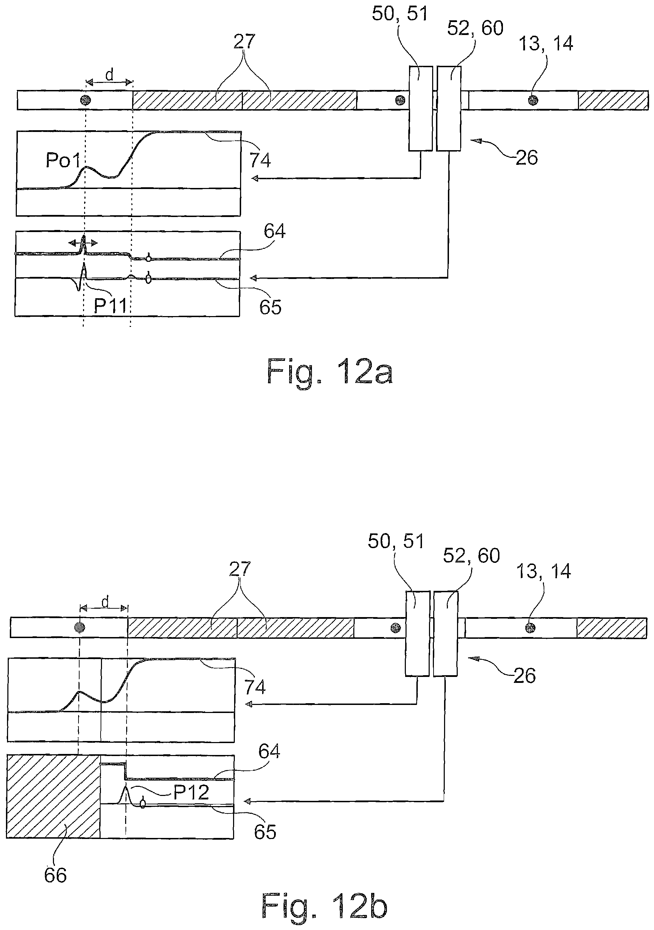

Die Einflüsse auf das Messsignal einer Kapsel in der unmittelbaren Nähe eines Hohlfiltersegments 27 zeigen die Fig. 12a und 12b, wobei das Holfiltersegment als Acetat-Hohlfiltersegment oder als NWA-Hohlfiltersegment oder als Tube-Segment ausgebildet sein kann. Die Fig. 12a, 12b zeigen schematisch einen Ausschnitt eines Multisegmentfilterstrangs 10, welcher ein Segment mit einer eingebetteten Kapsel 13, 14 aufweist, wobei die Kapsel 13, 14 einen Abstand d zu dem benachbarten Hohlfiltersegment 27 hat. Die Fig. 12a lässt erkennen, dass das Mikrowellensignal 74 der Mikrowellenstrangmessvorrichtung 51 im Bereich der Kapsel 13, 14 merklich verzerrt ist, und der Signalverlauf im Wesentlichen asymmetrisch um die Kapselposition $P_{01}$ liegt. Die Fig. 12a lässt weiter erkennen, dass das Lichtintensitätssignal 64 der optischen Strangmessvorrichtung 52 im Bereich der Kapsel 13, 14 relativ groß ist und dagegen der Signalverlauf am Segmentübergang als fallende Flanke geringer Höhe ausgebildet ist. Zudem hängt das Grundsignal der optischen Strangmessvorrichtung 52 stark von der Farbe der Kapsel und der Art des Hohlfiltersegments 27 ab, nämlich Acetat-Hohlfilter-, NWA-Hohlfilter- oder Tube-Segment. Die erste Ableitung 65 des Lichtintensitätssignals 64 bildet einen nahezu punktsymmetrischen Verlauf mit einem lokalen Maximum am Segmentübergang aus. Bei Multisegmentfiltersträngen 10 mit gleichfarbigen Segmenten, wie z.B. Acetat-Tube, kommt es vor, dass der Kontrast der Lichtdurchlässigkeit an einem Segmentübergang zwar gegeben ist, der Einfluss einer farbigen Kapsel 13, 14 im Acetattow jedoch im gesamten Signalverlauf dominiert. Da die Kapseln 13, 14 zudem in ihrer Position schwanken, liefert die Kreuzkorrelation, welche zur Schnittlagebestimmung berechnet wird, einen stark fehlerhaften und schwankenden Wert für die Regelung. Die Mikrowellenmessvorrichtung 51 kann zwar nicht den Segmentübergang, bei Segmenten gleich Dichte bestimmen, ist jedoch gut geeignet, die Bereiche der Kapseln 13, 14 zu detektieren. Der ermittelte Bereich wird in einem weiteren Rechenschritt als Ausblendbereich 66 herangezogen und vorteilhafterweise genutzt, um den Bereich der Kapseln 13, 14 auszublenden, somit ist eine genaue Schnittlageregelung realisierbar. Zudem lässt sich der Abstand d von der Kapsel bis zu einem benachbarten Hohlfiltersegment 27 durch die beschriebene Strangmessvorrichtungskombination nebst Ausblendalgorithmus einfach und genau bestimmen.

Die Fig. 13a bis Fig. 13c stellen verschiedene Phasen der Bestimmung der Kapselposition in der Nähe von absorbierenden benachbarten Segmenten, wie bspw. ein Aktivkohleabschnitt 25, dar, wobei der Grundgedanke ist, die Resonanzfrequenzverschiebung und die Dämpfung gemeinsam auszuwerten. Die Fig. 13a zeigt zunächst einen Graph des Frequenzsignals 67 und des Dämpfungssignals 68 zu einem Multisegmentstrangabschnitt in normierter Darstellung. Die Fig. 13b zeigt einen vergrößerten Ausschnitt aus Fig. 13a mit dem normierten Frequenzsignal 67 und dem normierten Dämpfungssignal 68 mit eingeblendeten Kapseln 13, 14. Die in den Fig. 13a und Fig. 13b dargestellten Signalverläufe lassen keine Extrema im Bereich der Kapselposition erkennen, so dass Rückschlüsse auf die tatsächliche Kapselposition oder gar des Füllgrades einer Kapsel 13, 14 möglich sind.

Fig. 13c zeigt ein Kombinationssignal 69 aus dem normierten Frequenzsignal 67 und dem normierten Dämpfungssignal 68, welches durch Differenzbildung erzeugt wurde. Der Signalverlauf des Kombinationssignals 69 lässt im Bereich der Kapselposition ein ausgeprägtes lokales Maximum 75 erkennen, so dass Rückschlüsse auf die tatsächliche Kapselposition und/oder des Füllgrades einer Kapsel 13, 14 möglich sind. Das Kombinationssignal 69 kann im Bedarfsfall mittels entsprechender Algorithmen, bspw. zum Bilden der ersten Ableitung und/oder zweiten Ableitung, insbesondere mittels eines geeigneten FIR-Filters, weiterbearbeitet werden.

Bezugszeichenliste

1       Multisegmentfilterstrangmaschine
2       Multisegmentfilterstrangmaschine
3       Strangmessvorrichtung
4       Schneidvorrichtung
5       Antriebssystem
6       Lageregler
7       Antriebssystem
8       Auswerteeinrichtung
9       Ausblasvorrichtung
10      Multisegmentfilterstrang
11      Multisegmentfilterstab mehrfacher Gebrauchslänge
12      Einlegerad
13      Kapsel
14      Kapsel
16      Einlegeposition
17      Längsachse
20      Kombinationsstrangmessvorrichtung
21      Materialstrang
22      Eingelegtes Objekt
23      Defektes Objekt
24      Objektabschnitt
25      Aktivkohleabschnitt
26      Strangförderrichtung
27      Hohlfiltersegment
28      NWA-Filtersegment
30      Vorrichtung
31      Eingabe- und Anzeigevorrichtung
32      Maschinensteuerung
33      Auswerteeinrichtung
35a     Mikrowellenalgorithmus
35b     Differenzbildungsalgorithmus
35c     Mikrowellen-/Laseralgorithmus
36      Algorithmenumschaltung
37      Drehwinkelgeber
38      Steuersignal
39      Schnittlagesignal
41      Gemeinsames Gehäuse
42      Strangeintrittsrohr
43      Schutzrohr

44      Kanal
50      Erste Strangmessvorrichtung
51      Mikrowellenstrangmessvorrichtung
52      Optische Strangmessvorrichtung
60      Zweite Strangmessvorrichtung
64      Lichtintensitätssignal
65      1. Ableitung des Lichtintensitätssignals
66      Ausgeblendeter Bereich
67      Resonanzfrequenzsignal
68      Dämpfungssignal
69      Kombinationssignal
71      Kohlesignalverlauf
72      Kapselsignalverlauf
73      Kapsel-/Kohlesignalverlauf
74      Mikrowellensignal
75      Lokales Maximum
76      Aktuelle Position

**Patentansprüche**

1.   Verfahren zum Erkennen und/oder Prüfen eines in ein stab- oder strangförmiges Multisegmentprodukt (10) der Tabak verarbeitenden Industrie eingelegten Objekts (22), insbesondere einer Kapsel (13, 14), wobei das Multisegmentprodukt (10) längsaxial durch eine Messvorrichtung (3, 50, 52) gefördert wird, die eine Mikrowellen- und/oder Hochfrequenz-Messeinrichtung (3, 50) und eine optische Messeinrichtung (52) umfasst und ein Mikrowellen- und/oder Hochfrequenz-Messsignal und ein optisches Messsignal ausgibt, die zur Auswertung an eine nachgeordneten Auswerteeinrichtung (8, 33) weitergeleitet werden, wobei es sich bei dem Mikrowellen- und/oder Hochfrequenz-Messsignal und/oder bei dem optischen Messsignal um ein zeitabhängiges und/oder ortsabhängiges Signal handelt und die Auswerteeinrichtung (8, 33) aus dem zeitabhängigen und/oder ortsabhängigen Signal mindestens eine Ableitung bildet und die Erkennung und/oder Prüfung des Objekts (22) auf einer Auswertung der mindestens einen Ableitung beruht, wobei

     - durch Auswertung des Messsignals der optischen Messvorrichtung (52) ein Übergang zwischen Segmenten des Multisegmentprodukts (10) ermittelt wird, und
     - durch die kombinierte Auswertung der Messsignale der optischen Messeinrichtung (52) und der Mikrowellen- und/öder Hochfrequenzmesseinrichtung (3, 50) der Abstand eines eingelegten Objekts (22) zu einem Übergang zwischen Segmenten des Multisegmentprodukts (10) ermittelt wird.

2.   Verfahren nach Anspruch 1, **dadurch gekennzeichnet, dass** die Auswerteeinrichtung (8, 33) eine axiale Position des Objekts (22) in dem Produkt (10) und/oder einen Füllgrad des Objekts (22) aus der mindestens einen Ableitung ermittelt.

3. Verfahren nach Anspruch 1 oder 2, **dadurch gekennzeichnet, dass** die Auswerteeinrichtung (8, 33) mindestens eine Eigenschaft des Objekts (22), nämlich Lage, Füllgrad und/oder Unversehrtheit, aus mindestens einem lokalen Extremum und/oder Wendepunkt und/oder Nulldurchgang im Kurvenverlauf der mindestens einen Ableitung und/oder des Messsignals bestimmt.

4. Verfahren nach einem der vorangehenden Ansprüche, **dadurch gekennzeichnet, dass** die Auswerteeinrichtung (8, 33) die zweite Ableitung des Mikrowellen-Messsignals bildet und die Position des Objekts (22) aus einem Charakteristikum, insbesondere einem lokalen Extremum, der zweiten Ableitung ermittelt.

5. Verfahren nach Anspruch 4, **dadurch gekennzeichnet, dass** die Auswerteeinrichtung (8, 33) eine Füllmenge des Objekts (22) über den Intensitätswert des Messsignals an der ermittelten Objektposition ermittelt.

6. Verfahren nach Anspruch 4 oder 5, **dadurch gekennzeichnet, dass** zur Korrektur der ermittelten Position und/oder Füllmenge des Objekts (22) jeweils eine entsprechende Korrekturfunktion herangezogen wird.

7. Verfahren nach Anspruch 6, **dadurch gekennzeichnet, dass** die Korrekturfunktion aus einem oder mehreren Verzerrparametern ermittelt wird, die eine Verzerrung des Messsignals durch ein zum Messobjekt benachbartes Objekt (22) beschreiben.

8. Verfahren nach einem der vorangehenden Ansprüche, **dadurch gekennzeichnet, dass** die mindestens eine Ableitung mittels eines digitalen FIR-Filters, insbesondere eines Filters für einfache numerische Differentiation, Differentiation mit interpolierenden kubischen Splines, Polynomapproximation oder Differentiation nach dem Rombergverfahren gebildet wird.

9. Verfahren nach einem der vorangehenden Ansprüche, **dadurch gekennzeichnet, dass** die Auswerteeinrichtung (8, 33) die erste Ableitung des optischen Messsignals bildet und den Übergang zwischen Segmenten eines Multisegmentprodukts (10) aus einem Charakteristikum, insbesondere einem lokalen Extremum, der ersten Ableitung ermittelt.

10. Verfahren nach einem der vorangehenden Ansprüche, **dadurch gekennzeichnet, dass** der ermittelte Übergang zwischen Segmenten des Multisegmentprodukts (10) zur Schnittlageregelung einer nachgeordneten Schneidvorrichtung (4) zum Zerschneiden des Multisegmentprodukts (10) verwendet wird.

11. Verfahren nach einem der vorangehenden Ansprüche, **dadurch gekennzeichnet, dass** bei der Ermittlung des Segmentübergangs ein Bereich um eine zuvor ermittelte Objektposition ausgeblendet wird, insbesondere um die Genauigkeit der Schnittlagebestimmung zu erhöhen.

12. Verfahren nach einem der vorangehenden Ansprüche, **dadurch gekennzeichnet, dass** zur kombinierten Auswertung ein zeitlicher Versatz, der zwischen den Messsignalen aufgrund eines in Produktförderrichtung (26) gegebenen Abstands zwischen der optischen Messeinrichtung (52) und der Mikrowellen- und/oder Hochfrequenzmesseinrichtung (3, 50) berücksichtigt und/oder korrigiert wird.

13. Vorrichtung (30) zum Erkennen und/oder Prüfen eines in ein stab- oder strangförmiges Multisegmentprodukt (10) der Tabak verarbeitenden Industrie eingelegten Objekts (22), insbesondere einer Kapsel (13, 14), umfassend eine Mikrowellen- und/oder Hochfrequenzmesseinrichtung (3, 50) zur Messung an einem längsaxial durch diese geförderten stab- oder strangförmigen Multisegmentprodukt (10) und Ausgabe eines Mikrowellen- und/oder Hochfrequenz-Messsignals, sowie eine nachgeordnete Auswerteeinrichtung (8, 33) zur Auswertung des Mikrowellen- und/oder Hochfrequenz-Messsignals, wobei die Mikrowellen- und/oder Hochfrequenzmesseinrichtung (3, 50) Teil einer Kombinationsmessvorrichtung (20) ist, die des Weiteren eine optische Messeinrichtung (52) zur Messung an dem durch diese geförderten Multisegmentprodukt (10) und Ausgabe eines optischen Messsignals umfasst, wobei die Auswerteeinrichtung (8, 33) zur kombinierten Auswertung der Messsignale der optischen Messeinrichtung (52) und der Mikrowellen- und/oder Hochfrequenzmesseinrichtung (3, 50) eingerichtet ist, **dadurch gekennzeichnet, dass** die Auswerteeinrichtung (8, 33) zur Bildung mindestens einer Ableitung aus dem Mikrowellen- und/oder Hochfrequenz-Messsignal und/oder aus dem optischen Messsignal, und zur Erkennung und/oder Prüfung des Objekts (22) beruhend auf einer Auswertung der mindestens einen Ableitung eingerichtet ist, wobei

- durch Auswertung des Messsignals der optischen Messvorrichtung (52) ein Übergang zwischen Segmenten des Multisegmentprodukts (10) ermittelt wird, und
- durch die kombinierte Auswertung der Messsignale der optischen Messeinrichtung (52) und der Mikrowellenmesseinrichtung (3, 51) der Abstand eines eingelegten Objekts (22) zu einem Übergang zwischen Segmenten des Multisegmentprodukts (10) ermittelt wird.

**14.** Vorrichtung (30) nach Anspruch 13, **dadurch gekennzeichnet, dass** die Mikrowellen-und/oder Hochfrequenzmessvorrichtung (3, 50) als Mikrowellenmesseinrichtung (51) mit einem Hohlraumresonator ausgebildet und insbesondere mit einer Messfrequenz im Bereich zwischen 1 GHz und 16 GHz betreibbar ist.

**15.** Vorrichtung (30) nach Anspruch 13, **dadurch gekennzeichnet, dass** die Mikrowellen- und/oder Hochfrequenzmessvorrichtung (3, 50) als kapazitive Hochfrequenzmessvorrichtung mit einem insbesondere ringförmigen Messkondensator ausgebildet und insbesondere mit einer Messfrequenz im Bereich zwischen 10 MHz und 1 GHz betreibbar ist.

**16.** Vorrichtung nach einem der Ansprüche 13 bis 15, **dadurch gekennzeichnet, dass** die optische Messeinrichtung (52) als Transmissionsmessvorrichtung, insbesondere als Lasersensoreinheit, ausgebildet und/oder mit einer Messwellenlänge im Bereich zwischen 380 nm und 780 nm betreibbar ist.

**17.** Vorrichtung (30) nach einem der Ansprüche 13 bis 16, **dadurch gekennzeichnet, dass** die Vorrichtung ausgebildet ist, ein Verfahren nach einem der Ansprüche 1 bis 13 auszuführen.

**18.** Strangmaschine, insbesondere Filterstrangmaschine (1, 2), der Tabak verarbeitenden Industrie mit wenigstens einer Einlegevorrichtung zum Einlegen von Objekten (22) in einen Filterstrang, einer Strangumhüllungsvorrichtung, einer Schneidvorrichtung (4) sowie einer Vorrichtung (30) nach einem der Ansprüche 13 bis 17.

**19.** Strangmaschine nach Anspruch 18, **dadurch gekennzeichnet, dass** die Strangmaschine als Zweistrangmaschine mit jeweils einem Strang zugeordneten Kombinationsmessvorrichtungen (20) und einer gemeinsamen Auswerteeinrichtung (8, 33) ausgebildet ist.

**20.** Filterstabmessstation der Tabak verarbeitenden Industrie mit einer Vorrichtung (30) nach einem der Ansprüche 13 bis 17.

**Claims**

**1.** Method for detecting and/or inspecting an object (22), in particular a capsule (13, 14), inserted into a stick-shaped or rod-shaped multi-segment product (10) of the tobacco processing industry, wherein the multi-segment product (10) is longitudinally axially conveyed through a measuring device (3, 50, 52) which comprises a microwave and/or high-frequency measuring device (3, 50) and an optical measuring device (52) and outputs a microwave and/or high-frequency measuring signal and an optical measuring signal which are transmitted to a downstream evaluation device (8, 33) for evaluation, wherein the microwave and/or high-frequency measurement signal and/or the optical measurement signal is a time-dependent and/or location-dependent signal and the evaluation device (8, 33) forms at least one derivative from the time-dependent and/or location-dependent signal and the recognition and/or inspection of the object (22) is based on an evaluation of the at least one derivative, wherein

- a transition between segments of a multi-segment product (10) is determined by evaluating the measuring signal of the optical measuring device (52), and
- the distance of an inserted object (22) to a transition between segments of the multi-segment product (10) is determined by the combined evaluation of the measuring signals of the optical measuring device (52) and the microwave and/or high-frequency measuring device (3, 50).

**2.** Method according to claim 1, **characterized in that** the evaluation device (8, 33) determines an axial position of the object (22) in the product (10) and/or a filling level of the object (22) from the at least one derivative.

**3.** Method according to claim 1 or 2, **characterized in that** the evaluation device (8, 33) determines at least one property of the object (22), namely position, filling level and/or integrity, from at least one local extremum and/or inflection point and/or zero crossing in the course of the curve of the at least one derivative and/or of the measurement signal.

**4.** Method according to one of the preceding claims, **characterized in that** the evaluation device (8, 33) forms the second derivative of the microwave measurement signal and determines the position of the object (22) from a characteristic, in particular a local extremum, of the second derivative.

**5.** Method according to claim 4, **characterized in that** the evaluation device (8, 33) determines a filling quantity of the object (22) from the intensity value of the measurement signal at the determined object position.

**6.** Method according to claim 4 or 5, **characterized in that** for the correction of the determined position and/or filling quantity of the object (22) in each case a corresponding correction function is used.

7. Method according to claim 6, **characterized in that** the correction function is determined from one or more distortion parameters which describe a distortion of the measurement signal by an object (22) adjacent to the measurement object.

8. Method according to one of the preceding claims, **characterized in that** the at least one derivative is formed by means of a digital FIR filter, in particular a filter for simple numerical differentiation, differentiation with interpolating cubic splines, polynomial approximation or differentiation according to the Romberg method.

9. Method according to one of the preceding claims, **characterized in that**
the evaluation device (8, 33) forms the first derivative of the optical measurement signal and determines the transition between segments of a multi-segment product (10) from a characteristic, in particular a local extremum, of the first derivative.

10. Method according to one of the preceding claims, **characterized in that** the determined transition between segments of the multi-segment product (10) is used for the cut position control of a downstream cutting device (4) for cutting the multi-segment product (10).

11. Method according to one of the preceding claims, **characterized in that** a region around a previously determined object position is blanked out during the determination of the segment transition, in particular in order to increase the accuracy of the cut position determination.

12. Method according to one of the preceding claims, **characterized in that**, for the combined evaluation, a time offset which occurs between the measurement signals due to a distance given in the product conveying direction (26) between the optical measuring device (52) and the microwave and/or high-frequency measuring device (3, 50) is taken into account and/or corrected.

13. Device (30) for detecting and/or inspecting an object (22), in particular a capsule (13, 14), inserted into a stick-shaped or rod-shaped multi-segment product (10) of the tobacco processing industry, comprising a microwave and/or high-frequency measuring device (3, 50) for measuring a stick-shaped or rod-shaped multi-segment product (10) conveyed longitudinally axially therethrough and outputting a microwave and/or high-frequency measuring signal, and a downstream evaluation device (8, 33) for evaluating the microwave and/or high-frequency measuring signal, wherein the microwave and/or high-frequency measuring device (3, 50) is part of a combination measuring device (20) which further comprises an optical measuring device (52) for measuring the multi-segment product (10) conveyed therethrough and outputting an optical measuring signal, wherein the evaluation device (8, 33) is set up for combined evaluation of the measuring signals of the optical measuring device (52) and the microwave and/or high-frequency measuring device (3, 50), **characterized in that** the evaluation device (8, 33) is set up for forming at least one derivative from the microwave and/or high-frequency measurement signal and/or from the optical measurement signal, and for recognizing and/or inspecting the object (22) on the basis of an evaluation of the at least one derivative, wherein

- a transition between segments of a multi-segment product (10) is determined by evaluating the measuring signal of the optical measuring device (52), and
- the distance of an inserted object (22) to a transition between segments of the multi-segment product (10) is determined by the combined evaluation of the measuring signals of the optical measuring device (52) and the microwave measuring device (3, 51).

14. Device (30) according to claim 13, **characterized in that** the microwave and/or high-frequency measuring device (3, 50) is designed as a microwave measuring device (51) with a cavity resonator and, in particular, can be operated with a measuring frequency in the range between 1 GHz and 16 GHz.

15. Device (30) according to claim 13, **characterized in that** the microwave and/or high-frequency measuring device (3, 50) is designed as a capacitive high-frequency measuring device with, in particular, an annular measuring capacitor and, in particular, can be operated, with a measuring frequency in the range between 10 MHz and 1 GHz.

16. Device according to one of the claims 13 to 15, **characterized in that** the optical measuring device (52) is designed as a transmission measuring device, in particular as a laser sensor unit, and/or can be operated with a measuring wavelength in the range between 380 nm and 780 nm.

17. Device (30) according to one of the claims 13 to 16, **characterized in that** the device is configured to perform a method according to one of the claims 1 to 13.

18. Rod machine, in particular filter rod machine (1, 2), of the tobacco processing industry with at least one insertion device for inserting objects (22) into a filter rod, a rod wrapping device, a cutting device (4) and a device (30) according to one of the claims 13 to 17.

**19.** Rod machine according to claim 18, **characterized in that** the rod machine is arranged as a two-rod machine with combination measuring devices (20) each assigned to one rod and a common evaluation device (8, 33).

**20.** Filter rod measuring station of the tobacco processing industry with a device (30) according to one of the claims 13 to 17.

**Revendications**

**1.** Procédé de détection et/ou de contrôle d'un objet (22) inséré dans un produit à segments multiples (10) en forme de bâtonnet ou de tige de l'industrie de traitement du tabac, en particulier d'une capsule (13, 14), le produit à segments multiples (10) étant transporté dans la direction de son axe longitudinal à travers un dispositif de mesure (3, 50, 52), qui comprend un moyen de mesure à micro-ondes et/ou à haute fréquence (3, 50) et un moyen de mesure optique (52) et émet un signal de mesure à micro-ondes et/ou à haute fréquence et un signal de mesure optique, qui sont transférés pour évaluation à un moyen d'évaluation (8, 33) disposé en aval, le signal de mesure à micro-ondes et/ou à haute fréquence et/ou le signal de mesure optique étant un signal dépendant du temps et/ou dépendant du lieu et le moyen d'évaluation (8, 33) formant, à partir du signal dépendant du temps et/ou dépendant du lieu, au moins une dérivation et la détection et/ou le contrôle de l'objet (22) reposant sur une évaluation de l'au moins une dérivation, dans lequel

    - par l'évaluation du signal de mesure du moyen de mesure optique (52), une jonction entre des segments du produit à segments multiples (10) est déterminée, et
    - par l'évaluation combinée des signaux de mesure du moyen de mesure optique (52) et du moyen de mesure à micro-ondes et/ou à haute fréquence (3, 50), la distance entre un objet (22) inséré et une jonction entre des segments du produit à segments multiples (10) est déterminée.

**2.** Procédé selon la revendication 1, **caractérisé en ce que** le moyen d'évaluation (8, 33) détermine une position axiale de l'objet (22) dans le produit (10) et/ou un degré de remplissage de l'objet (22) à partir de l'au moins une dérivation.

**3.** Procédé selon la revendication 1 ou 2, **caractérisé en ce que** le moyen d'évaluation (8, 33) détermine au moins une propriété de l'objet (22), à savoir la position, le degré de remplissage et/ou l'intégrité, à partir d'au moins un extremum local et/ou point d'inflexion et/ou passage par zéro dans le tracé de la courbe de l'au moins une dérivation et/ou du signal de mesure.

**4.** Procédé selon l'une des revendications précédentes, **caractérisé en ce que** le moyen d'évaluation (8, 33) forme la deuxième dérivation du signal de mesure à micro-ondes et détermine la position de l'objet (22) à partir d'une caractéristique, en particulier un extremum local, de la deuxième dérivation.

**5.** Procédé selon la revendication 4, **caractérisé en ce que** le moyen d'évaluation (8, 33) détermine une quantité de remplissage de l'objet (22) par le biais de la valeur d'intensité du signal de mesure en la position de l'objet déterminée.

**6.** Procédé selon la revendication 4 ou 5, **caractérisé en ce que**, pour la correction de la position et/ou de la quantité de remplissage déterminées de l'objet (22), une fonction de correction correspondante est respectivement prise en compte.

**7.** Procédé selon la revendication 6, **caractérisé en ce que** la fonction de correction est déterminée à partir d'un ou de plusieurs paramètres de distorsion, qui décrivent une distorsion du signal de mesure par un objet (22) voisin de l'objet mesuré.

**8.** Procédé selon l'une des revendications précédentes, **caractérisé en ce que** l'au moins une dérivation est formée au moyen d'un filtre numérique RIF, en particulier un filtre pour différentiation numérique simple, différentiation avec splines cubiques d'interpolation, approximation polynomiale ou différentiation selon la méthode de Romberg.

**9.** Procédé selon l'une des revendications précédentes, **caractérisé en ce que** le moyen d'évaluation (8, 33) forme la première dérivation du signal de mesure optique et détermine la jonction entre des segments d'un produit à segments multiples (10) à partir d'une caractéristique, en particulier un extremum local, de la première dérivation.

**10.** Procédé selon l'une des revendications précédentes, **caractérisé en ce que** la jonction déterminée entre des segments du produit à segments multiples (10) est utilisée pour le réglage de la position de coupe d'un dispositif de coupe (4) placé en aval pour couper le produit à segments multiples (10).

**11.** Procédé selon l'une des revendications précédentes, **caractérisé en ce que**, lors de la détermination de la jonction de segment, une zone autour d'une position d'objet précédemment déterminée est masquée, en particulier pour augmenter la précision de la détermination de la position de coupe.

**12.** Procédé selon l'une des revendications précédentes, **caractérisé en ce que**, pour l'évaluation combinée, un décalage temporel, qui se produit entre les signaux de mesure en raison d'une distance donnée dans le sens de transport du produit (26) entre le moyen de mesure optique (52) et le moyen de mesure à micro-ondes et/ou à haute fréquence (3, 50), est pris en compte et/ou corrigé.

**13.** Dispositif (30) de détection et/ou de contrôle d'un objet (22) inséré dans un produit à segments multiples (10) en forme de bâtonnet ou de tige de l'industrie de traitement du tabac, en particulier d'une capsule (13, 14), comprenant un moyen de mesure à micro-ondes et/ou à haute fréquence (3, 50) destiné à la mesure sur un produit à segments multiples (10) en forme de bâtonnet ou de tige transporté dans la direction de son axe longitudinal à travers celui-ci et à l'émission d'un signal de mesure à micro-ondes et/ou à haute fréquence, ainsi qu'un moyen d'évaluation (8, 33) placé en aval destiné à l'évaluation du signal de mesure à micro-ondes et/ou à haute fréquence, le moyen de mesure à micro-ondes et/ou à haute fréquence (3, 50) faisant partie d'un dispositif de mesure combiné (20), qui comprend en outre un moyen de mesure optique (52) destiné à la mesure sur le produit à segments multiples (10) transporté à travers celui-ci et à l'émission d'un signal de mesure optique, le moyen d'évaluation (8, 33) étant conçu pour l'évaluation combinée des signaux de mesure du dispositif de mesure optique (52) et du moyen de mesure à micro-ondes et/ou à haute fréquence (3, 50), **caractérisé en ce que** le moyen d'évaluation (8, 33) est conçu pour la formation d'au moins une dérivation à partir d'un signal de mesure à micro-ondes et/ou à haute fréquence et/ou à partir du signal de mesure optique, et pour la détection et/ou le contrôle de l'objet (22) sur la base d'une évaluation de l'au moins une dérivation, dans lequel

- par l'évaluation du signal de mesure du moyen de mesure optique (52), une jonction entre des segments du produit à segments multiples (10) est déterminée, et
- par l'évaluation combinée des signaux de mesure du moyen de mesure optique (52) et du moyen de mesure à micro-ondes (3, 51), la distance entre un objet (22) inséré et une jonction entre des segments du produit à segments multiples (10) est déterminée.

**14.** Dispositif (30) selon la revendication 13, **caractérisé en ce que** le dispositif de mesure à micro-ondes et/ou à haute fréquence (3, 50) est réalisé sous la forme d'un moyen de mesure à micro-ondes (51) avec une cavité résonnante et peut être exploité en particulier avec une fréquence de mesure comprise entre 1 GHz et 16 GHz.

**15.** Dispositif (30) selon la revendication 13, **caractérisé en ce que** le dispositif de mesure à micro-ondes et/ou à haute fréquence (3, 50) est réalisé sous la forme d'un dispositif de mesure capacitif à haute fréquence avec un compensateur de précision en particulier annulaire et peut être exploité en particulier avec une fréquence de mesure comprise entre 10 MHz et 1 GHz.

**16.** Dispositif selon l'une des revendications 13 à 15, **caractérisé en ce que** le moyen de mesure optique (52) est réalisé sous la forme d'un dispositif transmissomètre, en particulier sous la forme d'une unité de capteur laser, et/ou peut être exploité avec une longueur d'onde de mesure comprise entre 380 nm et 780 nm.

**17.** Dispositif (30) selon l'une des revendications 13 à 16, **caractérisé en ce que** le dispositif est conçu pour exécuter un procédé selon l'une des revendications 1 à 13.

**18.** Machine de fabrication de tiges, en particulier machine de fabrication de tiges de filtre (1, 2), de l'industrie de traitement du tabac, comportant au moins un moyen d'insertion destiné à l'insertion d'objets (22) dans une tige de filtre, un dispositif d'enveloppement de tige, un dispositif de coupe (4) ainsi qu'un dispositif (30) selon l'une des revendications 13 à 17.

**19.** Machine de fabrication de tiges selon la revendication 18, **caractérisée en ce que** la machine de fabrication de tiges est réalisée sous la forme d'une machine de fabrication de tiges doubles avec des dispositifs de mesure combinés (20) associés respectivement à une tige, et un moyen d'évaluation (8, 33) commun.

**20.** Poste de mesure de bâtonnet de filtre de l'industrie de traitement du tabac, comportant un dispositif (30) selon l'une des revendications 13 à 17.

Fig. 1

Fig. 2

Fig. 3

Fig. 4

71

Abstand = 6mm

72

kapsel+kohle

nur kapsel

nur kohle

Position x (mm)

## Fig. 5a

71, 73

73

72, 73

72

71

Position x (mm)

## Fig. 5b

71, 73

73

73

71

72

Position x (mm)

## Fig. 5c

Fig. 6

Fig. 7

Fig. 8

Fig. 9

Fig. 10

Fig. 11

Fig. 12a

Fig. 12b

Fig. 13a

Fig. 13b

Fig. 13c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1845291 A1
- EP 2243385 A2
- EP 2873334 A1
- DE 102012209954 A1
- EP 2606754 A2
- EP 2762016 A
- DE 102011006439
- DE 4109603 A1
- DE 19854550 B4
- DE 102011083049 A1
- DE 102004003447 A1
- DE 102012102340 A1

**In der Beschreibung aufgeführte Nicht-Patentliteratur**

- **R. HERRMANN ; U. SCHLEMM.** Determination of the Quality and the Position of Capsules in Filterrods. *RHODIA Colloquium,* Mai 2011